# EUROPÄISCHE PATENTSCHRIFT

(11) **EP 0 824 553 B1**
(45) Veröffentlichungstag und Bekanntmachung des Hinweises auf die Patenterteilung: **17.02.1999**
(21) Anmeldenummer: 96919663.3
(22) Anmeldetag: 03.05.1996
(51) Int. Cl.: C08F 8/12, C08F 222/02, C08F 220/04, C11D 3/37

(54) **WASSERLÖSLICHE COPOLYMERE UND VERFAHREN ZU IHRER HERSTELLUNG UND IHRE VERWENDUNG**
WATER-SOLUBLE COPOLYMERS, PROCESS FOR PRODUCING THE SAME AND THEIR USE
COPOLYMERES SOLUBLES DANS L'EAU, LEUR PROCEDE DE PRODUCTION ET LEUR UTILISATION

(30) Priorität: 12.05.1995 DE 19516957
(43) Veröffentlichungstag der Anmeldung: 25.02.1998
(73) Patentinhaber: STOCKHAUSEN GmbH & CO. KG, 47805 Krefeld (DE)
(72) Erfinder: STOCKHAUSEN, Dolf, D-47800 Krefeld (DE); KLIMMEK, Helmut, D-47803 Krefeld (DE); KRAUSE, Frank, D-47533 Kleve (DE); BERGHAHN, Matthias, D-47809 Krefeld (DE)
(74) Vertreter: Klöpsch, Gerald, Dr.-Ing. Patentanwalt
(86) Internationale Anmeldenummer: EP9601853
(87) Internationale Veröffentlichungsnummer: WO9635728

(56) Entgegenhaltungen:
- EP-A- 0 497 611
- EP-A- 0 622 449
- EP-A- 0 637 627
- DE-A- 3 743 739
- DE-A- 4 300 772
- DE-A- 4 305 396

## Beschreibung

Gegenstand der Erfindung sind wasserlösliche Copolymere mit direkt an die Polymerkette kovalent gebundenen OH-Gruppen auf Basis ungesättigter Mono- und Dicarbonsäuren, Vinylester bzw. -ether und sulfonsäure/sulfatgruppenhaltigen Monomeren sowie ein Verfahren zu ihrer Herstellung und ihre Verwendung in Wasch- und Reinigungsmitteln, bei der Inhibierung von Wasserhärte, als Dispergiermittel sowie bei der Herstellung, Veredelung und/oder Färbung von Textilfasern und Textilien und bei der Lederherstellung.

Aufgrund einer in den letzten Jahren immer stärker in den Vordergrund tretenden ökologischen Betrachtungsweise war ein großer Teil der Bemühungen zur Entwicklung neuer Polymere auf deren biologische Abbaubarkeit gerichtet. In ganz besonderem Maße standen dabei die Produkte im Vordergrund, deren Anwendung und Entsorgung in wäßrigen Systemen erfolgte. In einigen Bereichen wie etwa der Papierindustrie erlebten daher abbaubare Polymere wie z.B. Stärken eine Renaissance als Bindemittel, in anderen Bereichen wurden Pfropfpolymere aus nachwachsenden Rohstoffen wie Stärke oder Zucker und synthetischen Monomeren entwickelt. Für viele Anwendungen sind die technischen Anforderungen aber relativ hoch und können von den Produkten auf Basis nachwachsender Rohstoffe nicht in der Weise erfüllt werden, wie es mit den bisher verwendeten rein synthetischen Polymeren der Fall war. Beispielhaft sind die Polycarboxylate in Misch-Schlichten für Textilfasern zu nennen, bei denen als Kompromiß zwischen Abbaubarkeit und Schlichteeigenschaft oft eine Mischung aus Stärke und Polycarboxylat eingesetzt wird.

Ein anderes wichtiges Einsatzgebiet wasserlöslicher Polymere sind die Wasch- und Reinigungsmittel.
In den letzten Jahren war dort die Entwicklung durch den Ersatz der Polyphosphatbestandteile geprägt, die, wie bekannt, zu einer Überdüngung der Gewässer und den unter dem Stichwort Eutrophierung bekannten Problemen führen.

Polyphosphate besitzen neben der Primärwaschwirkung auch ein günstiges Sekundärwaschverhalten, indem sie die Erdalkalimetall-Ionen aus dem Waschwasser, den Textilien und dem Schmutz entfernen, die Ausfällungen unlöslicher Erdalkalimetallsalze auf den Textilien verhindern und den Schmutz in der Waschlauge dispergiert halten. Dadurch werden auch nach mehreren Waschgängen Inkrustationen und Vergrauungen unterdrückt. Als Ersatzstoffe für Polyphosphate sind derzeit im Markt Polycarboxylate wie Polyacrylsäuren und Acrylsäure/Maleinsäurecopolymere wegen ihrer Bindefähigkeit für Erdalkali-Ionen und wegen ihres Dispergier- und Schmutztragevermögens vertreten. Die letztgenannte Eigenschaft wird besonders gut durch die Verwendung von Acrylsäure/Maleinsäurecopolymeren erreicht. [Richter, Winkler in Tenside Surfactants Detergents 24 (1987) 4]. Derartige Polymerisate werden z. B. in den Patentanmeldungen DE 32 33 776 A1 und EP 76 992 B1 beschrieben

In der DE 32 33 776 A1 wird ein Verfahren zur Herstellung von Copolymerisaten, die Mono- und Dicarbonsäure-Einheiten enthalten beschrieben, das durch die Verwendung eines bestimmten Wasserstoffperoxid/Peroxodisulfat-Initiatorverhältnisses gekennzeichnet ist. Erfindungsgemäß werden 10-60 Gew.% Dicarbonsäuremonomer/Anhydrid, 90-40 Gew. % Monocarbonsäure und optional 0-20 Gew.% carboxylgruppenfreie Monomere, die allerdings als nicht unbedingt erforderlich angesehen werden, eingesetzt und im wäßrigen Medium bei 60-150°C und teilweiser Neutralisation polymerisiert.

Der EP 76 992 B1 sind polymere organische Säuren, Verfahren zu ihrer Herstellung und Ihre Verwendung in Wasch und Reinigungsmitteln zu entnehmen. In einem Substanzpolymerisationsveifahren werden 50 - 95 Gew. % ungesättigte Monocarbonsäure, 0,5 - 5 Gew. % Monomere ohne Säurefunktion und 0 - 49 Gew. % ungesättigte Dicarbonsäure umgesetzt und gegebenfalls nach Neutralisation in Waschmitteln als Gerüststoffsubstanz und Inkrustationsinhibitoren eingesetzt. Die säurefreien Monomere werden aus der Gruppe der Vinyl- und Acrylester ausgewählt.

Dem Problem der Eutrophierung konnte durch den Einsatz der Polycarboxylate begegnet werden. Diese synthetischen Polymeren sind aber im wesentlichen als inert gegenüber Abbauvorgängen anzusehen. Wegen der bereits bestehenden und noch zu erwartenden mengenmäßigen Verbreitung dieser Polymere stellt sich daher die Frage nach deren Verbleib im Ökosystem. Untersuchungen hierzu haben gezeigt, daß ca. 90 % der Polycarboxylate am Klärschlamm adsorbiert und darüber entsorgt werden, d. h. durch Deponierung, landwirtschaftliche Nutzung oder Verbrennung. Ein biologischer Abbau findet nur in sehr begrenztem Maße statt, wobei die referierten Abbauraten zwischen 1 und 10 % liegen. Die Angaben hierzu sind den Veröffentlichungen von J. Lester et. al. "The partitioning of polycarboxylic acids in activated sludge", Chemosphere, Vol. 21, Nos. 4 - 5, pp 443 - 450 (1990). H. Schumann "Elimination von ¹⁴C-markierten Polyelektrolyten in biologischen Abwasserreinigunsprozessen, Wasser. Abwasser (1991) S. 376 - 383, P. Berth "Möglichkeiten und Grenzen des Ersatzes von Phosphaten in Waschmitteln", Angewandte Chemie (1975) S. 115 - 142 zu entnehmen.

Vom ökologischen Gesichtspunkt her ist die Einbringung großer Mengen nicht abbaubarer Verbindungen in die Umwelt daher bedenklich. Als Lösung dieses Problems bietet sich die Verwendung biologisch abbaubarer, d. h. zu Kohlendioxid und Wasser demineralisierbarer Polymere an, oder aber zumindest die Effektivität der marktgängigen Polycarboxylate derart zu verbessern, daß sie von der einzusetzenden Konzentration her erniedrigt werden können bzw. daß sie die Funktionen anderer Waschmittelbestandteile mit übernehmen können, um dadurch eine Entlastung der Umwelt zu erreichen.

Aus der DE 43 27 494 A1 ist die Herstellung von Polyasparaginsäureimiden bekannt. Derartige Polykondensate sind als Additive für Wasch- und Reinigungsmittel vorgesehen. Die EP 633 310 A1 beschreibt ebenfalls den Einsatz dieser begrenzt bioabbaubaren Polymere als Builder in Waschmitteln. Generell weisen derartige Polymere aber ein niedrigeres Binde- und Dispergiervermögen im Vergleich zu Polycarboxylaten auf, sind also weniger effektiv. Weiterhin haben sie den Nachteil, daß unter den Waschbedingungen, d.h. Alkali und erhöhte Temperatur, eine Zerstörung des Polymers durch Hydrolyse/Verseifung unter gleichzeitiger Ammoniakabspaltung eintritt. Aus ökologischer Sicht stellen derartige Phosphatersatzstoffe ein Problem dar, da der an das Polymer gebundene Stickstoff als Düngemittel die vom Phosphat her bekannte Eutrophierung der Gewässer begünstigen würde.

Aus der US-Patentschrift 4 144 226 ist die Herstellung eines biologisch abbaubaren Polycarboxylat-Polymers auf Basis von Glyoxylsäureestern bekannt. Zur Erlangung technisch interessanter Molekulargewichte sind nach dem dort angegebenen Polymerisationsverfahren in wasserfreien organischen Lösemitteln Temperaturen von 0 °C oder tiefer erforderlich, wobei Polymerausbeuten von nur 75 % erreicht werden, denen sich weitere ausbeutemindernde Isolierungs- und Reinigungsschritte anschließen. Wegen seiner Instabilität im sauren bzw. alkalischen pH-Bereich müssen die Endgruppen des Polymeren zusätzlich chemisch blockiert werden. Trotzdem kann beim Freisetzen der Carboxylgruppen aus der Form des Esters durch Verseifung eine Molekulargewichtserniedrigung durch Kettenspaltung und damit ein Verlust an Wirksamkeit auftreten. Aufgrund der Verwendung extrem teurer und großtechnisch nicht verfügbarer Monomere, sehr aufwendiger Polymerisations- und Aufarbeitungsprozesse sowie der geschilderten Instabilität eignen sich diese Polymeren nicht für den Einsatz großer Mengen bei den eingangs genannten Anwendungen.

In der Patentschrift GB 1 385 131 wird im Rahmen einer Waschmittelzusammensetzung der Einsatz eines biologisch abbaubaren Polymeren aus Maleinsäure- und Vinylalkohol-Einheiten beschrieben. Das Herstellverfahren umfaßt eine Fällungspolymerisation in Benzol, die Abtrennung und Trocknung des Polymeren sowie dessen Hydrolyse und Verseifung in wäßrig alkalischem Medium. Sieht man auch hier von der recht umständlichen und teuren Herstellung dieser Polymeren einmal ab, so zeigen sich noch weitere Nachteile bei der Abbaubarkeit und beim Eigenschaftsprofil. Nach den Angaben zur Abbaubarkeit geht ein drastischer Rückgang des Abbaus mit dem Anstieg des Molekulargewicht einher. Eine Steigerung des Molekulargewichts von 4.200 nach 18.000 bedeutet bereits einen Rückgang des Abbaus um 63 %. Bezüglich des Eigenschaftsprofils muß erwähnt werden, daß die Maleinsäure/Vinylalkohol Polymeren erst ab einem Gehalt von 35 Gew. % in Waschmittelformulierungen bessere Ergebnisse bei der Vergrauungsinhibierung zeigen als Natriumtripolyphosphat. Gegenüber dem Stand der Technik sind die unwirtschaftlich hohen Konzentrationen an Polymer im Waschmittel nachteilig, wobei derzeit gängige Waschmittel-Formulierungen etwa 5 % Polymer enthalten (DE 40 08 696).

Der Patentschrift GB 1 284 815 ist ebenfalls die Verwendung von Maleinsäure-Vinylalkohol-Copolymeren in Wasch- und Reinigungsmitteln als Phophat-Ersatzstoffe zu entnehmen. Auch hier werden Einsatzmengen von 10 - 80 Gew.% und vorzugsweise 15 - 60 Gew.%, bezogen auf das Wasch- bzw. Reinigungsmittel, empfohlen, was ebenfalls eine Anwendung unwirtschaftlich hoher Konzentrationen bedeutet und was darüber hinaus auf eine ungenügende Wirksamkeit bei kleineren Einsatzkonzentrationen hinweist.

Die EP 0 497 611 A1 beschreibt die Herstellung und Verwendung von verbesserten und teilweise biologisch abbaubaren Polymeren auf Basis Maleinsäure, Acrylsäure und Vinylacetat, die in einem organischen Lösemittel polymerisiert und anschließend wäßrig hydrolysiert werden. Weiterhin wird die Möglichkeit einer Modifizierung der Polymeren durch nachträgliche Verseifung, gegebenenfalls gefolgt von einer Oxidationsreaktion beschrieben. Die Verfahrensvariante der Polymerisation in einem organischen Lösemittel wird als notwendig gegenüber der wäßrigen Fahrweise dargestellt, da auf diese Weise einerseits jedes gewünschte Monomerverhältnis im Polymer realisierbar wird und andererseits unerwünschte Hydrolysereaktionen der Monomeren nicht auftreten können. Die Abbaubarkeit der Terpolymeren nach der EP 0 497 611 A1 wurde in einem Closed Bottle-Test geprüft und innerhalb einer Skala von 0 - 100 % (BOD) (Biological Oxygen Demand) nach einer Testdauer von 25 Tagen bewertet. In dieser Testreihe sind eine reine Polyacrylsäure mit 1,8 % und ein Copolymer aus Maleinsäure und Vinylacetat mit 8 % Abbaubarkeit angegeben. Die im organischen Lösemittel hergestellten Produkte wurden in der hydrolysierten und verseiften Form und mit unterschiedlichen Molverhältnissen der eingesetzten Monomeren untersucht, wobei sich ein biologischer Abbau von 13,6 - 28,9 % einstellte.

Der EP 0 398 724 A2 ist ein Verfahren zur Herstellung von Maleinsäure/Acrylsäure-Copolymeren in wäßriger Lösung zu entnehmen, bei der auch säurefreie Monomere verwendet werden können. Das Herstellungsverfahren beruht insbesondere auf der speziellen gleichzeitigen Dosierung aller Monomerkomponenten und sonstiger, für die Polymerisation erforderlicher Reagenzien. Obwohl die biologische Abbaubarkeit der Polymeren nicht besonders hervorgehoben wird, hat man solche Werte in 3 Versuchsbeispielen gemessen. Beispiel 1 erläutert die Herstellung eines Copolymeren aus Maleinsäure und Acrylsäure und gibt den biologischen Abbau nach 30 Tagen mit 3,3 % (BOD) an. Beispiel 5 beschreibt ein Copolymer aus Maleinsäure, Acrylsäure und 10,6 Gew% Vinylacetat mit einem biologischen Abbau von 9,6 % (BOD) nach 30 Tagen. Beispiel 6 beschreibt ein Copolymer aus Maleinsäure, Acrylsäure und 10,6 Gew% 2-Hydroxyethylmethacrylat mit einem Abbaugrad von 7 % nach 30 Tagen.

In der US-3 887 480 werden Wasch- und Reinigungsmittel beschrieben, die auf Basis von Polymeren aus 35 - 70 Mol% Maleinsäure, 20 - 45 Mol% Vinylacetat und 2 - 40 Mol% Acrylsäure hergestellt werden. Die Erfindung basiert u.a. auf der Entdeckung, daß der Monomerumsatz in wäßriger Fahrweise durch sehr hohe Persulfatinitiatormengen gesteigert werden kann. Eine Verseifung der einpolymerisierten Vinylacetatmonomere findet nicht statt, eine biologische Abbaubarkeit liegt nicht vor.

In der EP 0 193 360 B1 werden granuläre Waschmittelkompositionen mit einem Phosphatgehalt von unter 5 Gew. % beschrieben, die neben Zeolith 0,1 bis 20 Gew. % Polymere aus Dicarbonsäureanhydrid. Monocarbonsäureanhydrid und einem nichtionischen Spacermonomer vom Typ Acrylatester, Vinylester bzw. Vinylalkohol verwenden. Die Herstellung der Terpolymerisate wird nicht erwähnt, weitere Comonomere sind nicht vorgesehen. Anwendungstechnische Versuchsergebnisse sind nicht aufgeführt.

Die US 3 879 288 beschreibt ein Verfahren zur Unterdrückung von Wasserhärte durch den Zusatz von Polymerisaten auf Basis von Fumarsäure- und und Allylsulfonatmonomer. Aufgrund der niedrigen Polymerisationsaktivität der Monomerkomponenten enthalten die Polymerisatlösungen nicht tolerierbare hohe Restmonomeranteile, das Binde- und Dispergiervermögen ist niedrig.

Aus der DE 43 00 772 A1 ist die Herstellung von in der Abbaubarkeit gegenüber dem Stand der Technik verbesserten Terpolymerisaten bekannt. Die dort erwähnten Terpolymere werden im wäßrigen Medium aus Monomeren vom Typ der einfach ungesättigten Dicarbonsäuren, Monocarbonsäuren und Monomeren, die nach Hydrolyse zu Polymerbausteinen mit einer kovalent an die C-C-Polymerkette gebundenen Hydroxylgruppe umgewandelt werden können, aufgebaut. Die Polymerisate der DE '772 können fakultativ bis 10 Gew.-% weiterer, radikalisch copolymerisierbarer Monomere enthalten.

Obwohl Polymerisate auf der o.g. Monomerbasis gemäß der DE 43 05 396 A1 bzw. der DE 43 26 129 A1 bessere Eigenschaften in Wasch- und Dispergierversuchen aufweisen als die marktüblichen Maleinsäure/Acrylsäure-Copolymerisate, sind die komplexierenden Eigenschaften für höherwertige Metallionen wie z.B. Eisen(III)ionen im Vergleich zu gängigen Komplexiermitteln wie beispielsweise EDTA, NTA und Alkylphosphonaten weiter zu verbessern, um den Einsatz dieser ökölogisch sehr bedenklichen Substanzen zu vermeiden oder wenigstens zu reduzieren.
Auch eine weitere Verbesserung des sekundären Waschvermögens, als dessen Maß die Dispergierwirkung von Schmutzteilchen während des Waschprozesses angesehen wird, ist in Hinblick auf eine ökonomisch und ökologisch gewünschte mengenmäßige Begrenzung von Waschmittelbestandteilen anzustreben.
Bezüglich der Verarbeitbarkeit unter alkalischen Bedingungen weisen die Polymerisate eine begrenzte Stabilität auf, d.h. die Polymerisatlösungen beginnen unter den alkalischen Bedingungen zu schichten.
Die Polymerisate ermöglichen eine Verhinderung von Hartwasserausfällungen, doch ist auch hier eine ökonomisch und ökologisch begründete verbesserte Wirksamkeit gefordert, um die Polymerkonzentrationen in den Brauch- und Prozeßwässern zu verringern.
Die Viskosität der Polymerisate bei gegebener Aktivsubstanz ist zwar geringer als bei den handelsüblichen Waschmittelpolymerisaten auf Basis Maleinsäure/Acrylsäure, jedoch ist aus Gründen der Handhabung und Weiterverarbeitung eine noch niedrigere Viskosität gewünscht. Die Anforderungen des Marktes gehen in Richtung niedrige Viskosität bei maximaler Konzentration an Aktivsubstanz.

Die Terpolymere gemäß der DE 43 00 772 A1 sind mit geringen Restmonomergehalten herzustellen, doch ist bezüglich der ungesättigten Dicarbonsäuren der Gehalt an Maleinsäure immer höher als der der physiologisch unbedenklichen Fumarsäure.

Aus der EP 0 622 449 A2 sind wasserenthärtende Formulierungen bekannt und die EP 0 637 627 A2 beschreibt Waschmittelformulierungen, die frei von Zeolithen und kristallinen Schichtsilikaten sind. Sowohl die Wasserenthärter als auch die Waschmittel enthalten Polymerisate, die aus ungesättigten Mono- und Dicarbonsäuren und von durch Verseifung OH-Gruppen generierenden Monomeren gebildet werden. Optional können weitere Monomere enthalten sein, wobei Polymere mit diesen weiteren Monomere weder in den Anwendungsbeispielen eingesetzt noch Angaben zu deren Eigenschaften gemacht werden.

Es bestand daher die Aufgabe, die Terpolymere der DE 43 00 772 A1 in ihrem Eigenschaftsprofil zu verbessern. Für den Einsatz in Wasch-, Reinigungs-, Faser- und Textilbehandlungsmitteln ist ein erhöhtes Bindevermögen für höherwertige Metall-Ionen, insbesondere für Calcium(II)- und Eisen(III)-Ionen und insbesondere auch bei erhöhten Temperaturen, wie sie etwa in Waschprozessen vorkommen, anzustreben. Weiterhin ist ein gesteigertes Dispergier und Suspendiervermögen für Pigment- und Schmutzteilchen vonnöten, um die Effektivität im Waschprozeß zu verbessern und um beispielsweise in Waschmittelvorprodukten die, gegebenenfalls alkalische, Dispergierung und Stabilisierung von Zeolith - Teilchen in wäßriger Phase zu verbessern.
Als eine generelle Verbesserung, die u.a. besonders für die Einarbeitung der Polymerisate in flüssige Waschmittel oder in die für eine Sprühtrocknung vorgesehenen Mischungen von Bedeutung ist, sollen die Polymerisatlösungen eine möglichst geringe Viskosität mit einer möglichst hohen Trockensubstanz aufweisen.
Darüber hinaus ist die Wirksamkeit als Antibelagmittel bzw. Kristallisationsinhibitor zu erhöhen, um beispielsweise beim Einsatz der Polymerisate für Prozeßwässer in Wärmetauschern, in Dampferzeugern oder beim Eindampfen von Zuckersäften die wirksame Menge reduzieren zu können.
Für den Einsatz bei der Lederherstellung ist es von Bedeutung, daß die Polymerisate sowohl Chrom fixieren als auch Fülle, Weichheit, Narbenfestigkeit und Farbe geben. Die biologische Abbaubarkeit sollte bei der Modifizierung der Polymere erhalten bleiben. Bezüglich des Restmonomeranteils soll eine weitere Verminderung erreicht und gleichzeitig eine Minimierung des Maleinsäureanteils im Gemisch der ungesättigten Dicarbonsäuren realisiert werden.

Die Aufgabe wurde überraschenderweise durch die Herstellung und Verwendung von Copolymeren gelöst, die durch radikalische Polymerisation von Monomermischungen aus
a) 10 - 70 Gew. % monoethylenisch ungesättigen C₄₋₈-Dicarbonsäuren bzw. deren Salzen
b) 20 - 85 Gew. % monoethylenisch ungesättigen C₃₋₁₀-Monocarbonsäuren bzw. deren Salze
c) 1 - 50 Gew. % einfach ungesättigten Monomeren, die nach Hydrolyse oder Verseifung Hydroxylgruppen an der Polymerkette freisetzen
d) 0,1 - 40 Gew. % monoethylenisch ungesättigten Sulfonsäuregruppen und / oder Sulfatgruppengruppen enthaltenden Monomeren
e) 0 - 10 Gew% weiterer, radikalisch copolymerisierbarer Monomere, wobei die Summe der Monomeren nach a) bis e) 100 Gew.% beträgt,
in wäßriger Lösung und nachfolgender Verseifung der Monomerbestandteile nach c) erhältlich sind.

Als Monomere der Gruppe a) kommen monoethylenisch ungesättigte C₄-C₈-Dicarbonsäuren, deren Anhydride bzw. deren Alkali- und/oder Ammoniumsalze und/oder Aminsalze in Frage. Geeignete Dicarbonsäuren sind beispielsweise Maleinsäure, Fumarsäure, Itaconsäure, Methylenmalonsäure. Bevorzugt verwendet man Maleinsäure, Maleinsäureanhydrid, Itaconsäure, Itaconsäureanhydrid sowie die entsprechenden Natrium-, Kalium- oder Ammoniumsalze von Malein- bzw. Itaconsäure. Die Monomeren der Gruppe a) sind zu 10 - 70 Gew%, vorzugsweise zu 20 - 60 Gew% und besonders bevorzugt zu 25 - 55 Gew% in der Monomermischung vorhanden.

Als Monomere der Gruppe b) kommen monoethylenisch ungesättigte C₃- bis C₁₀-Carbonsäuren sowie deren Alkali- und/oder Ammoniumsalze und/oder Aminsalze in Betracht. Zu diesen Monomeren gehören beispielsweise Acrylsäure, Methacrylsäure, Dimethylacrylsäure, Ethylacrylsäure, Vinylessigsäure, Allylessigsäure. Vorzugsweise verwendet man aus dieser Gruppe von Monomeren Acrylsäure, Methacrylsäure, deren Gemische sowie die Natrium-, Kalium- oder Ammoniumsalze oder deren Mischungen. Die Monomeren der Gruppe b) sind zu 20 - 85 Gew%, vorzugsweise zu 25 - 65 Gew% und besonders bevorzugt zu 30 - 60 Gew% in der Monomermischung vorhanden.

Zu den Monomeren der Gruppe c) sind jene zu rechnen, die nach der Copolymerisation bei einer Spaltungsreaktion beispielsweise durch saure Hydrolyse oder alkalische Verseifung des Polymerisates eine oder mehrere Hydroxylgruppen, die direkt an der C-C-Polymerkette kovalent gebunden sind, freisetzen. Beispielhaft seien genannt: Vinylacetat, Vinylpropionat, Essigsäure-Methylvinylester, Methylvinylether, Etylenglykolmonovinylether, Vinylidencarbonat.

Die Monomeren der Gruppe c) sind zu 1 - 50 Gew%, vorzugsweise 1 - 30 Gew%, bevorzugt 1 - 20 Gew% und insbesondere bevorzugt zu 1 - 15 Gew. in der Monomermischung vorhanden.

Als Monomere der Gruppe d) eignen sich z. B. Sulfongruppen und Sulfatgruppen enthaltende Monomere wie beispielsweise Meth(allylsulfonsäure), Vinylsulfonsäure, Styrolsulfonsäure, Acrylamidomethylpropansulfonsäure, sowie Hydroxyethyl(meth)acrylatsulfate, (Meth)allylalkoholsulfate sowie deren Alkali und/oder Ammoniumsalze. Besonders bevorzugt sind (Meth)allylsulfonsäure und (Meth)allylalkoholsulfate. Die Monomeren der Gruppe d) sind zu 0,1 - 40 Gew. %, vorzugsweise zu 0,5 - 25 Gew. %, bevorzugt zu 1 - 10 Gew. % und insbesonders bevorzugt zu 1 - 5 Gew. % in der Monomermischung vorhanden.

Die Monomere der Gruppe e) werden lediglich und gegebenenfalls zur Modifizierung der Polymerisate eingesetzt.Als Monomere der Gruppe e), die bei der Copolymerisation gegebenenfalls eingesetzt werden, gehören beispielsweise die in begrenzter Menge zu verwendenden doppelt ethylenisch ungesättigten, nicht konjugierten Verbindungen, die üblicherweise als Vernetzer wirken und die Molekulargewichte der Polymerisate erhöhen. Weiterhin können die Polymerisate durch solche Monomere der Gruppe e) modifiziert werden, die das Löslichkeitsverhalten verändern bzw. einen teilweise tensidischen oder hydrophoben Charakter hervorrufen, wie beispielsweise N-Alkylacrylamide, Ester von alkoxylierten C₁₋₁₈-Alkoholen oder Polyalkylenglykolester von (Meth)Acrylsäure und Polyalkylenglykolether von (Meth)allylalkohol, die gegebenenfalls endverschlossen sein können. Die Monomeren der Gruppe e) sind gegebenenfalls bis zu 10 Gew% in der Monomermischung vorhanden.

Die Herstellung der Copolymerisate erfolgt in wäßriger Lösung bei 40 - 180 °C in Anwesenheit von Polymerisationsinitiatoren, die unter den Polymerisationsbedingungen Radikale bilden, z. B. anorganische und organische Peroxide, Persulfate, Azoverbindungen und sogenannte Redoxkatalysatoren.
Geeignete Polymerisationsinitiatoren sind beispielsweise Acetylcyclohexansulfonylperoxid, Diacetylperoxidicarbonat, Dicyclohexylperoxidcarbonat, Di-2-ethylhexylperoxidicarbonat, tert.-Butylperneodecanoat, 2,2'-Azobis(4-methoxy-2,4-dimethylvaleronitril), 2,2'-Azobis-((2-methyl-N-phenylpropionamidin)dihydrochlorid, 2,2'-Azobis-(2-methylpropionamidin)dihydrochlorid, tert.-Butylperpivalat, Dioctanoylperoxid, Dilauroylperoxid, 2,2'-Azobis-(2,4-dimethylvaleronitril), Dibenzoylperoxid, tert.-Butylper-2-ethyl-hexanoat, tert.-Butylpermaleinat, 2,2'-Azobis-(isobutyronitril), Dimethyl-2,2'-azobisisobutyrat, Natriumpersulfat, Kaliumpersulfat, Ammoniumpersulfat Bis-(ter.-butylperoxid)-cyclohexan, tert.-Butylperoxiisopropylcarbonat, tert.-Butylperacetat, Wasserstoffperoxid. 2,2'-Bis-(tert.-butylperoxi)-butan Dicumylperoxid, Di-tert.-butylperoxid, Di-tert.-amylperoxid, Pinanhydroperoxid, p-Methanhydroperoxid, Cumolhydroperoxid und tert.-Butylhydroperoxid. Die Initiatoren werden an die gewählte Polymerisationstemperatur entsprechend ihrer Halbwertszeit angepaßt und können allein oder in Mischung untereinander angewendet werden. Bezogen auf die bei der Polymerisation eingesetzten Monomeren verwendet man 0,01 bis 20, vorzugsweise 0,05 bis 10 Gew. % eines Polymerisationsinitiators oder einer Mischung aus mehreren Polymerisationsinitiatoren. Bei der Copolymerisation können selbstverständlich auch Redox-Coinitiatoren mitverwendet werden, z.B. Benzoin, Dimethylanilin, Ascorbinsäure sowie organisch lösliche Komplexe von Schwermetallen, wie Kupfer, Cobalt, Eisen, Mangan, Nickel und Chrom. Die reduzierende Komponente von Redoxkatalysatoren kann auch beispielsweise von Verbindungen wie Natriumsulfit, Natriumbisulfit, Natriumformaldehydsulfoxylat und Hydrazin gebildet werden. Die Mitverwendung von Redox-Coinitiatoren gestattet es, die Polymerisation bei tieferer Temperatur durchzuführen. Die üblicherweise verwendeten Mengen an Redox-Coinitiatoren betragen etwa 0,01 bis 5 % bei reduzierend wirkenden Verbindungen und 0,1 bis 100 ppm, vorzugsweise 0,5 - 10 ppm bei Schwermetallen. Falls das Monomergemisch an der unteren Grenze des für die Polymerisation in Betracht kommenden Temperaturbereiches anpolymerisiert und anschließend bei einer höheren Temperatur auspolymerisiert wird, ist es zweckmäßig, mindestens zwei verschiedene Initiatoren zu verwenden, die bei unterschiedlichen Temperaturen zerfallen, so daß in jedem Temperaturintervall eine ausreichende Konzentration an Radikalen zur Verfügung steht.

Da die alleinige Verwendung von Persulfat in der Regel zu breiten Molekulargewichtsverteilungen und niedrigen Restmonomeren und die alleinige Verwendung von Peroxiden zu engeren Molekulargewichtsverteilungen und höherem Restmonomerengehalt führt, ist es gegebenfalls von Vorteil, eine Kombination aus Peroxid und/oder Persulfat, Reduktionsmittel und Schwermetall als Redoxkatalysator einzusetzen.
Die Copolymerisation kann auch durch Einwirkung von ultravioletter Strahlung in Anwesenheit von Foto-Initiatoren bzw. Sensibilisatoren durchgeführt werden. Hierbei handelt es sich beispielsweise um Verbindungen wie Benzoin und Benzoinether, α-Methylbenzoin oder α-Phenylbenzoin. Auch sogenannte Triplett-Sensibilisatoren, wie Benzyldiketale, können verwendet werden.
Falls eine Regelung des Molekulargewichts erforderlich ist, werden Polymerisationsregler angewendet. Geeignete Regler sind beispielsweise Mercaptoverbindungen, Aldehyde, Schwermetallsalze. Wird die Polymerisation in Gegenwart von Reglern durchgeführt, so werden diese in Mengen von 0,005 bis 20 Gew. %, bezogen auf die Monomeren, eingesetzt. Eine Regelung des Molekulargewichts kann auch über die Wahl des Materials des Polymerisationsreaktors erfolgen, so führt z.B. die Verwendung von Stahl als Reaktormaterial zu niedrigeren Molekulargewichten als die Verwendung von Glas oder Emaille. Darüber hinaus läßt sich eine Regelung des Molekulargewichtes über die Initiatormenge erreichen. Beispielsweise kann durch Erhöhung des Peroxidgehaltes in einer Peroxid/Persulfat-Initiatormischung das mittlere Molekulargewicht des Polymerisates erniedrigt werden. Besonders bevorzugt ist auch eine Verfahrensvariante, bei der eine weitere Zugabe von Peroxid, insbesondere Wasserstoffperoxid, nach dem Ende der Initiatordosierung mit der Maßgabe erfolgt, die Molekulargewichte des erfindungsgemäßen Polymerisates zu erniedrigen.

Die Polymerisation erfolgt in üblichen Polymerisationsgefäßen bei Polymerisationstemperaturen von 40 - 180 °C, wobei gegebenenfalls beim Überschreiten von Siedetemperaturen der Reaktionsteilnehmer unter Druck gearbeitet wird. Ein bevorzugter Temperaturbereich für die Polymerisation liegt bei 60 - 120 °C. Es wird in einer gegegebenenfalls durch Einblasen von Stickstoff erzeugten Inertgasatmosphäre unter Ausschluß von Luftsauerstoff gearbeitet. Die Monomer-Komponenten werden entweder in wäßriger Lösung insgesamt vorgelegt und durch Zugabe des Initiatorsystems auspolymerisiert oder aber in einer bevorzugtem Ausführungsform über einen Zeitraum von 1 - 10 Stunden, vorzugsweise 2 - 8 Stunden in den Polymerisationsreaktor dosiert.

Eine Ausführungsform besteht in der Vorlage des Monomers a) und der Dosierung der Monomeren b) bis e), die sowohl in Mischung als auch getrennt zugegeben werden können. Eine bevorzugte Ausführungsform besteht in einer gemeinsamen Vorlage von Monomeren a) und d) und der Dosierung der verbliebenen Monomeren.

Das Initiatorsystem wird parallel zu den Monomeren dosiert und dessen Zugabe nach Beendigung der Monomerdosierung noch vorzugsweise eine Zeit lang fortgeführt, um den Monomerumsatz zu vervollständigen. Die Vorlage eines geringen Anteils des Initiators bzw. der Initiatormischung hat sich als vorteilhaft für den anfänglichen Polymerisationsverlauf erwiesen. Um Copolymerisate mit einem niedrigem Restgehalt an Maleinsäure zu erhalten und um eine vorzeitige Verseifüng von Monomeren der Gruppe c) zu unterdrücken, werden die eingesetzten sauren Monomeren neutralisiert oder zumindest teilweise neutralisiert. Dies kann durch Neutralisation oder Teilneutralisation der vorgelegten Monomeren nach a) und gegebenenfalls d) geschehen und auch durch völlige oder teilweise Neutralisation der zu dosierenden Monomeren nach b) und gegebenenfalls nach e). Hierbei sollte jedoch eine Neutralisation oder Teilneutralisation der carbonsäurehaltigen Monomeren während der Polymerisation durch Dosierung von Laugen in den Reaktor bei gleichzeitiger Dosierung von Vinylestern vermieden werden, da dies zu vorzeitiger Verseifung des Monomeren unter Bildung von Acetaldehyd und braungefärbten Reaktionsprodukten führt. Alternativ ist es auch möglich, die Monomere nach a) und gegebenfalls nach d) überwiegend in neutralisierter Form vorzulegen und die zu dosierenden Monomeren weitgehend in ihrer sauren Form zu dosieren. Ziel der Maßnahmen muß erstens die Vermeidung der vorzeitigen Hydrolyse der Monomeren nach c) sein und zweitens die Aufrechterhaltung einer vernünftigen Polymerisationsgeschwindigkeit.

Bezüglich des Einsatzes der Monomeren nach c) kann es bei bestimmten Mischungsverhältnissen mit Wasser bzw. in Mischungen mit den teilneutralisierten anderen Monomeren, insbesondere bei höheren Anteilen von Monomer nach c) zu Phasentrennungen aufgrund von Mischungslücken kommen. Dies kann zu Problemen bei der Monomerdosierung und des Polymerisationsablaufes bzw. zu einer unerwünschten Hydrolyse der Monomeren nach c) führen. Derartige Probleme lassen sich durch den Einsatz von grenzflächenaktiven Verbindungen vermeiden, die vor allem in der Form anionischer und nichtionischer Tenside bzw. deren Mischungen eingesetzt werden. Durch die Polymerisation in Anwesenheit der Tenside wird gleichzeitig eine Verminderung des Restmonomergehaltes und eine Verbesserung des Dispergiervermögens der Polymerisate erreicht.

Zu den anionischen Tensiden gehören die Natriumalkylbenzolsulfonate, Alkansulfonate, Fettalkoholsulfate und Fettalkoholpolyglykolethersulfate. Im einzelnen seien genannt C₈-C₁₂-Alkylbenzolsulfonate, C₁₂₋₁₆-Alkansulfonate, wie beispielsweise Natriumdodecansulfonat, C₁₂₋₁₆-Alkylsulfate, wie beispielsweise Na-Laurylsulfat, C₁₂₋₁₆-Alkylsulfosuccinate und sulfatierte ethoxylierte C₁₂₋₁₆-Alkanole. Außerdem eignen sich sulfatierte Fettsäurealkanolamide, α-Sulfofettsäureester, Fettsäuremonoglyceride oder Umsetzungsprodukte von 1 bis 4 Mol Ethylenoxid mit primären oder sekundären Fettalkoholen oder Alkylphenolen. Gut geeignet sind ferner carboxymethylierte Umsetzungsprodukte von 3 bis 20 Mol Ethylenoxid mit C₁₂₋₁₆-Fettalkoholen oder C₈₋₁₂-Mono- oder Dialkylphenolen sowie die Phosphorpartialester von ethoxylierten C₁₂₋₁₆-Fettalkoholen.

Als nichtionische niedermolekulare Tenside sind die überwiegend wasserlöslichen Anlagerungsprodukte von 3 bis 40 Mol Ethylenoxid an 1 Mol Fettalkohol, Alkylphenol, Fettsäure, Fettsäureamid, Alkansulfonamid oder Sorbitanfettsäureester mit HLB-Werten von 8 bis 18 geeignet. Besonders geeignet sind die Anlagerungsprodukte von 5 bis 16 Mol Ethylenoxid an Kokos- oder Talgfettalkohole, an Oleylalkohol, an synthetische Alkohole mit 8 bis 16 Kohlenstoffatomen sowie an Mono- oder Dialkylphenole mit 6 bis 14 Kohlenstoffatomen in den Alkylresten.

Die Ethoxylierungsprodukte können gegebenenfalls zusätzlich bis zu 90 Gew. % Propylenoxid, bezogen auf den Gesamtgehalt an Alkylenoxid, enthalten. Die Anlagerungsprodukte, die Ethylen- und Propylenoxid einkondensiert enthalten, können gegebenenfalls durch zusätzliches Einkondensieren von Butylenoxid in Mengen bis zu 50 Gew. %, bezogen auf den Gesamtgehalt an Alkylenoxid, modifizert sein.

Zu den gut geeigneten nichtionischen Tensiden gehören ferner die mit C₄₋₁₈-Alkylgruppen modifizierten Alkylpolyglucoside mit einem Oligomerisierungsgrad von 1 bis 10 der Glucoseeinheiten sowie die durch Umsetzung der genannten Alkylpolyglucoside mit Ethylenoxid erhältlichen wasserlöslichen Alkoxylierungsprodukte.

Als polymere nichtionische grenzflächenaktive Verbindungen eignen sich die durch Methylierung, Alkoxylierung mit Ethylen- oder Propylenoxid sowie durch Carboxymethylierung erhältlichen wasserlöslichen Cellulose- oder Stärkederivate, wie Methylcellulose, Hydroxyethyl- oder Hydroxypropylcellulose oder Carboxymethylcellulose.

Geeignet sind ferner teilverseifte Polyvinylacetate mit einem Verseifungsgrad von 50 - 95 % sowie Pfropfpolymere von Vinylacetat auf Polyethylenglykol.

Die grenzflächenaktiven Verbindungen werden meist in Zusatzmengen von 0,1 bis 5 Gew. %, insbesondere von 0,5 bis 2 Gew. %, bezogen auf die Summe der Monomeren, eingesetzt. Bei der Polymerisation werden sie entweder in die Monomervorlage gegeben oder aber mit den anderen Komponenten gemischt oder getrennt in den Reaktor dosiert.

Üblicherweise enthalten Copolymerisate, die unter Verwendung von Maleinsäure hergestellt werden einen Restmonomeranteil von überwiegend freier Maleinsäure neben geringen Anteilen von Fumarsäure. So ist dem Vergleichsbeispiel 2 für ein Polymer gemäß der DE 43 00 772 ein Restgehalt an Maleinsäure von 2530 ppm und an Fumarsäure von 300 ppm zu entnehmen. Überraschenderweise führt nun die Verwendung von (Meth)allylsulfonat in den erfindungsgemäßen Monomermischungen zu Polymerisaten, bei denen das Verhältnis von Maleinsäure zu Fumarsäure deutlich zugunsten der Fumarsäure verschoben ist. Dies ist äußerst vorteilhaft, da Maleinsäure aus ökotoxikologischer Sicht vermieden werden sollte.

Zum Beispiel betragen die LD₅₀-Werte (Ratte, oral) von Maleinsäure 708 mg/kg und die von Fumarsäure 10700 mg/kg.

Nach Abschluß der Polymerisation werden, falls erforderlich, niedrig siedende Bestandteile wie z. B. Restmonomere bzw. deren Hydrolyseprodukte gegebenenfalls bei Unterdruck abdestilliert. Oftmals ist es von Vorteil, diesen Destillationsschritt bereits während der Polymerisation durchzuführen, um beispielsweise niedrigsiedende oder die Polymerisation behindernde Bestandteile zu entfernen.

Mit der Destillation kann auch eine Aufkonzentrierung der wäßrigen Polymerisatlösungen erfolgen. Derart aufkonzentrierte Polymerisatlösungen haben im Vergleich zu Polymerisaten, die von vornherein mit einer höheren Konzentration polymerisiert werden eine niedrigere Viskosität. Niedrigviskose Polymerisate mit erhöhter Konzentration erhält man auch, wenn in dem Polymerisationsansatz ein Teil der wäßrigen Phase zum Auflösen der Monomervorlage durch eine bereits fertige Polymerisatlösung ersetzt wird.

Die Hydrolyse oder Verseifung der Monomeren gemäß c) findet im sauren oder basischen Milleu statt. pH-Werte von kleiner 6,5 und größer 10 werden bevorzugt. Je nach Monomertyp verläuft die Verseifung bei 60 - 130 °C. Die Zeitdauer für die Verseifung hängt von den gewählten pH-Werten und den Temperaturen ab, sie liegt zwischen 0,1 und 8 Stunden. Die für die Verseifung erforderlichen pH-Werte in der zu verseifenden Polymerlösung können durch Zugabe fester, flüssiger, gelöster oder gasförmiger, anorganischer und organischer Säuren und Basen eingestellt werden. Beispielhaft seien Schwefelsäure, Salzsäure, Schwefeldioxid, p-Toluolsulfonsäure, Natronlauge und Kalilauge genannt. Die bei der Verseifung gebildeten, leicht flüchtigen Reaktionsprodukte können durch Destillation, gegebenenfalls bei Unterdruck abgetrennt werden. Eine bevorzugte Ausführungsform ist die alkalische Verseifung ohne vorherige Destillation von Restmonomeren und Hydrolyseprodukten in Gegenwart von Peroxiden, wobei die noch vorhandenen Restmonomeren und die Hydrolyseprodukte in situ polymerisiert bzw. zu ungefährlichen Carbonsäuren oxidiert werden. Der Verseifungsgrad der verseifbaren Monomereneinheiten beträgt 1 - 100 %, vorzugsweise 30 - 100 %, und besonders bevorzugt 60 - 100 %. Zum Abschluß kann das wäßrige Polymerisat auf den für die Anwendung erforderlichen pH-Wert eingestellt werden. Hierzu werden die bekannten Mittel wie Laugen und Basen, Mineralsäuren, Carbonsäuren und Polycarbonsäuren eingesetzt. Beispielhaft seien hier mineralische Säuren und Säureanhydride, wie Salzsäure, Schwefelsäure, Phosphorsäure, Schwefeldioxid und Schwefeltrioxid genannt, als organische Säuren können Ameisensäure, Essigsäure, Citronensäure, Weinsäure, p-Toluolsulfonsäure eingesetzt werden. Als Laugen können beispielsweise Natronlauge, Kalilauge, Ammoniak bzw. Ammoniumhydroxyd, Amine, Alkanolamine und Hydroxylamine verwendet werden.

Prinzipiell kann die Polymerisation auch in der Art einer Suspensionspolymerisation durchgeführt werden, wobei die wäßrige Monomerphase unter Zuhilfenahme von Suspensionsstabilisatoren in einer organischen Phase, die z. B. aus Cyclohexan bestehen kann, dispergiert wird und in Form dieser Suspension auspolymerisiert und verseift wird. Danach kann das Wasser azeotrop aus der Suspension abdestilliert und die festen Polymerisatteilchen können problemlos von der organischen Phase abfiltriert und nach Trocknung ihrer Verwendung zugeführt werden. Eine weitere Möglichkeit zur Herstellung pulverförmiger Polymerisate besteht in der Sprühtrocknung der erfindungsgemäßen Polymerisatlösung. Beispielsweise können Waschpulver direkt aus einer gemeinsamen Lösung bzw. Suspension der erfindungsgemäßen Polymerisatlösungen und weiteren Waschmittelbestandteilen durch Sprühtrocknung erhalten werden.

Überraschenderweise wurde gefunden, daß die erfindungsgemäßen Polymerisatlösungen eine verbesserte Alkalistabilität aufweisen, wenn der Gehalt an Monomer d) in der Monomermischung unter 10 Gew. % und besonders bevorzugt unter 7 Gew. % liegt. Stellt man die Polymerisatlösungen auf alkalische pH-Werte ein, wie es z.B. bei der Produktion von Waschtmitteln üblich ist, so tritt keine Veränderung auf, wohingegen Polymerisate nach der DE 43 00 772 A1 nach einiger Zeit zu schichten anfangen. Diese verbesserte Alkalistabilität kommt besonders dann zur Geltung, wenn die Polymerisate längere Zeit vor ihrer Weiterverarbeitung alkalisch gestellt werden.

Die oben beschriebenen Polymerisate fallen im Molekulargewichtsbereich von 500 bis 5.000.000 an, wobei die niedrigmolekularen Produkte mit Molekulargewichten unter 70.000 für die Anwendung als Cobuilder bereits voll geeignet sind. Anhand anwendungstechnischer Untersuchungen hat sich gezeigt, daß die erfindungsgemäßen Polymerisate im Molekulargewichtsbereich 20.000 und niedriger eine ausgezeichnete Wirkung in Wasch- und Reinigungsmitteln entfalten und ein gutes Dispergier- und Suspendiervermögen aufweisen. Darüber hinaus werden sie im Klärschlamm-Eliminationstest (OECD-Norm 303 A) fast vollständig entfernt. Die biologische Abbaubarkeit wurde einerseits nach der Richtlinie OECD 302 B bestimmt, bei der die durch den Abbau entstehende CO₂-Menge gemessen wird oder aber nach einem standardisierten Kompost-Test nach der ASTM D 5338/92, der den Bioabbau ebenfalls auf der Basis des entstehenden CO₂ mißt. Aufgrund der guten Eliminierbarkeit und Abbaubarkeit erfüllen die Polymerisate die Anforderungen für einen Einsatz in Waschmitteln.

Überraschenderwiese wurde gefunden, daß die Monomeren nach d), insbesondere Methallylsulfonsäure, ein auf das Molekulargewicht regelnden Einfluß ausüben, so daß die erfindungsgemäßen Polymerisate außer ihrer hohen Wirksamkeit auch mit einer niedrigen Viskosität bei hohem Aktivgehalt hergestellt werden können. So haben die erfindungsgemäßen Polymerisate bei Aktivgehalten von 40 % eine Viskosität von ca. 500 mPas, wohingegen Polymerisate nach der DE 43 00 772 bei vergleichbaren Aktivgehalten etwa 1100 mPas aufweisen. Ein für den Einsatz in Waschmitteln handelsübliches Copolymerisat auf der Basis von Maleinsäure und Acrylsäure hat, bei ebenfalls 40 % Aktivgehalt, eine Viskosität von etwa 3600 mPas. Die niedrigen Viskositäten der erfindungsgemäßen Polymerisate sind generell von großem Vorteil bei der Verwendung und insbesondere bei der Einarbeitung als Bestandteil in Waschmittelrezepturen.

Daher eignen sich die erfindungsgemäßen Polymerisate in besonders hervorragender Weise für Wasch- und Reinigungsmittel-Rezepturen, die völlig oder teilweise mittels Sprühtrocknung hergestellt werden bzw. die in Kompaktierungsverfahren mit einem möglichst geringen Wassergehalt eingesetzt werden müssen. Das günstige Verhältnis von niedriger Viskosität zu hoher Aktivsubstanz ermöglicht einerseits die Herstellung leicht handhabbarer Slurries für einen ungestörten Sprühprozeß und ermöglicht andererseits eine vereinfachte Herstellung von beispielsweise Waschmittel-Kompaktgranulaten durch Extrudertechnologie, bei der die Aktivsubstanz mit möglichst wenig Wasser in die Mischung eingebracht werden soll, um direkt trockene, rieselfähige Granulate zu erzeugen bzw. um einen möglichen Trockenaufwand zu minimieren.

Für den Einsatz in Flüssigwaschmitteln können die Polymerisate mittels hydrophober Co-Monomerer, wie sie beispielsweise die Monomeren der Gruppe e) darstellen, modifiziert werden. Dadurch kann das Auflöseverhalten der Polymerisate in der flüssigen Phase der Flüssigwaschmittel angepaßt werden.

Gegenstand der Erfindung sind dementsprechend auch Wasch- und Reinigungsmittel, insbesondere Textilwaschmittel, welche die erfindungsgemäßen Polymerisate enthalten. Vorzugsweise werden die Polymeren in Mengen von 0,5 - 30 Gew. % und insbesondere in Mengen von 2 - 25 Gew. % eingesetzt. Weiterhin ist es bevorzugt, daß die Mittel außer den Polymeren ein oder mehrere Inhaltsstoffe aus der Gruppe der alkalischen anorganischen Salze und üblicherweise in Wasch- oder Reinigungsmitteln eingesetzten Buildersubstanzen enthalten. Die erfindungsgemäßen Mittel können in fester, granularer oder flüssiger bis pastöser Form vorliegen und lassen sich durch die bekannten Herstellungsverfahren wie Sprühtrocknen, Misch-, Granulier- und/oder Extrudierverfahren herstellen. Dabei ist es auch möglich, daß eine Gerüststoffkombination in Form eines Compounds als Zumischkomponente zu anderen granularen Bestandteilen von Wasch- und Reinigungsmitteln eingesetzt wird.

Derartige Gerüststoffkombinationen, die ebenfalls Bestandteil der Erfindung sind, enthalten die erfindungsgemäßen Polymere, sowie in einer bevorzugten Ausführungsform 1 - 30 Gew. % der erfindungsgemäßen Polymere und 50 - 70 Gew.% Zeolith und/oder kristalline Schichtsilikate. Ebenfalls bevorzugt sind Gerüststoffkombinationen, die 5 - 30 Gew. % Natriumcarbonat, 0 - 10 Gew. % amorphe Silikate, 0 - 25 Gew. % organische Polycarbonsäuresalze und 0 - 5 Gew. % übliche (co)polymere Acrylate enthalten. Wegen der besonders guten dispergierenden / suspendierenden Eigenschaften der erfindungsgemäßen Polymerisate besitzen wäßrige Suspensionen vorgenannter Zusammensetzung eine ausgezeichnete Stabilität gegenüber Absetzvorgängen. Darüber hinaus können die Gerüststoffkombinationen zusätzlich flüssige bis wachsartige Komponenten, vorzugsweise Tenside, enthalten.

Zu den alkalischen anorganischen Salzen gehören die wasserlöslichen Bicarbonate, Carbonate, amorphe Silikate oder Mischungen aus diesen; insbesondere werden Alkalicarbonat und Alkalisilikat eingesetzt. Der Gehalt der Mittel an Alkalicarbonaten kann 0 bis etwa 20 Gew. % betragen, der Gehalt der Mittel an Alkalisilikat beträgt im allgemeinen 0 bis etwa 10 Gew. %. Vorzugsweise werden Natriumsilikat und Natriumcarbonat eingesetzt.

Zu den bekannten und üblicherweise in Wasch- und Reinigungsmitteln eingesetzten Buildersubstanzen gehören in erster Linie Phosphate, Zeolithe und Schichtsilikate, wobei Zeolithe und kristalline Schichtsilikate bevorzugt sind. Geeignete Zeolithe weisen eine mittlere Teilchengröße von weniger als 10 µm auf und enthalten vorzugsweise 18 - 22 Gew. % an gebundenem Wasser. Kristalline, schichtförmige Silikate sind ein Ersatz bzw. Teilersatz für Phosphate und Zeolithe. Insbesondere sind sowohl β- als auch δ-Natriumdisilikate Na₂Si₂O₅.yH₂O Die erfindungsgemäßen Mittel enthalten vorzugsweise wasserhaltigen Zeolith und/oder kristalline Schichtsilikate in Mengen von 10 bis 65 Gew. %.

Geeignete organische Gerüstsubstanzen sind beispielsweise Polycarbonsäuren, wie etwa Citronensäure, Adipinsäure, Bernsteinsäure, Glutarsäure, Weinsäure, Zuckersäuren, Aminocarbonsäuren, Polyasparaginsäuren, Nitrilotriessigsäure sowie Mischungen aus diesen.

Sie werden bevorzugt als Salze eingesetzt, ihr Gehalt in diesen Mitteln beträgt vorzugsweise 0 - 20 Gew. %.

Weiterhin können die Wasch- und Reinigungsmittel zusätzlich zu den erfindungsgemäßen Polymeren bekannte und übliche homo- und copolymere Polycarboxylate auf Basis von (Meth)Acrylsäure und/oder Maleinsäure und gegebenenfalls weiterer Monomer- und Pfropfkomponenten, sowie Polyacetale aus der Umsetzung von Dialdehyden mit Polyolcarbonsäuren enthalten. Der Anteil dieser Polycarboxylate soll in den erfindungsgemäßen Wasch- und Reinigungsmitteln 2 Gew.% nicht überschreiten.

Im Falle der Herstellung von Waschmitteln für gefärbte Textilien müssen sogenannte Verfärbungsinhibitoren zugesetzt werden. Diese Substanzen verhindern, daß von den stärker gefärbten Textilien oder Textilpartien Farbstoff auf die ungefärbten oder hellfarbigen Textilien oder Textilpartien übertragen wird. Gleiches gilt auch für die Verhinderung der Übertragung von optischen Aufhellern. Vorzugsweise werden als Verfärbungsinhibitoren 0,1 - 5 Gew. % Polymere bzw. Copolymere des Vinylpyrrolidons, Vinyloxazolidons, Vinylimidazols, Polyamin-N-Oxide, gegebenenfalls noch unterstützt durch Cellulase, eingesetzt.

Als weitere übliche Inhaltsstoffe enthalten die erfindungsgemäßen Wasch- und Reinigungsmittel insbesondere 10 - 40 Gew. % anionische, nichtionische, amphotere, zwitterionische und/oder kationische Tenside.

Als anionische Tenside werden solche vom Typ der Sulfonate und Sulfate eingesetzt, beispielsweise seien Alkylbenzolsulfonate, Olefinsulfonate, Alk(en)ylsulfate, Sulfobernsteinsäureester, ethoxylierte Fettalkoholsulfate, α-Sulfofettsäuren bzw. deren Ester und sulfierte Fettsäureglycerinester bzw. deren Gemische genannt. Anionische Tenside können auch in Form der Fettsäureseifen verwendet werden.

Als nichtionische Tenside werden vorzugsweise ethoxylierte C₉-C₁₈-Alkohole, Alkylglucoside und alkoxylierte Fettsäurealkylester eingesetzt, sowie Tenside vom Typ der Aminoxide, Fettsäurealkanolamide und Polyhydroxyfettsäureamide.
Die Verwendung von nichtionischen Celluloseethern aus der Gruppe der Methylhydroxypropylcellulosen, welche einen Anteil von 15 - 35 Gew. % an Methoxygruppen und 1 - 15 Gew. % an Hydroxypropylgruppen aufweisen, hat sich zur Entfernung von fett- und ölhaltigen Anschmutzungen auf Textilien bewährt.

Außerdem können die erfindungsgemäßen Wasch- und Reinigungsmittel 15 - 45 gew. % weitere übliche Inhaltsstoffe wie beispielsweise Vergrauungsinhibitoren (Schmutzträger), Schauminhibitoren, Bleichmittel und Bleichaktivatoren, optische Aufheller, Enzyme, textilweichmachende Stoffe, Farb- und Duftstoffe sowie Neutralsalze enthalten

Schauminhibitoren werden im allgemeinen in Mengen von 0 - 8 Gew. % eingesetzt. Gebräuchlich sind hier Seifen, Silikonöl oder auch hydrophobe Kieselsäuren. Bei nichttensidartigen Entschäumern reichen wegen der im Vergleich zu Seifen stärkeren Wirkung allgemein Mengen von 0 - 3,5 Gew. % aus.

Optische Aufheller, auch (Fluoreszenz)-Weißtöner genannt, absorbieren den für das menschliche Auge nicht sichtbaren UV-Anteil des Sonnenlichts im Wellenlängenbereich um 350 nm und emittieren blaue Fluoreszenzstrahlung um 440 nm (500 nm). Die Fluoreszenzstrahlung der z.B. auf textile Fasern während des Waschvorganges aufgezogenen Weißtöner addiert sich zum reflektierten sichtbaren Licht, so daß nicht nur ein etwaiger Gelbstich eines an sich weißen Gewebes, wie er nach mehrfacher Nutzung und Reinigung auftreten kann, wieder zu Weiß ergänzt, sondern insgesamt auch ein intensiveres Weiß erzielt wird. Insbesondere Stilbenderivate sind als optische Aufheller geeignet. Daneben spielen noch Cumarin- und Chinolon- (Carbostyryl-) sowie 1,3-Diphenylpyrazolin-Strukturen, Naphthalindicarbonsäure- und Zimtsäure-Derivate sowie Kombinationen von Benzoxazol- oder Benzimidazol-Strukturen mit konjugierten Systemen eine Rolle. Optische Aufheller werden im Bereich von 0 bis 5 Gew. %, vorzugsweise im Bereich von 0,1 bis 0,3 Gew. % eingesetzt.

Enzyme sind fast unverzichtbare Inhaltsstoffe in Universalwaschmitteln und in vielen anderen Formulierungen für das Waschen und Reinigen. Eingesetzt werden beispielsweise Pankreatin (Trypsin), Proteasen, Amylasen, Cellulasen und Lipasen. Ihr Anwendungsbereich liegt zwischen 0 und 3 Gew. %, bevorzugt zwischen 0,3 und 1,3 Gew. %.

Aus den erfindungsgemäßen Polymerisaten wurden erfindungsgemäße Waschmittel (W1 bis W10) folgender Zusammensetzung hergestellt, die Mengenangaben bedeuten Gew. %:

| Rohstoffe | W1 | W2 | W3 | W4 | W5 | W6 | W7 | W8 | W9 | W10 |
|---|---|---|---|---|---|---|---|---|---|---|
| C₉₋₁₃-Alkylbenzolsulfonat-Na | 9 | | 2 | | 6 | 6 | | | 5 | 9 |
| C₁₆₋₁₈-Talgfettalkoholsulfat | | 4 | | | 7 | 2 | 2 | 7,5 | | |
| C₁₂₋₁₈-Fettalkoholsulfat-Na | | | | | | | 2 | | | |
| C₁₂₋₁₈-Fettalkohol mit 5 EO | 4,3 | 18 | 15 | 14 | 4,5 | 4,5 | 2,5 | | | |
| C₁₂₋₁₄-Fettalkohol mit 7 EO | | | | | | | | 5 | 7 | |
| C₁₆₋₁₈-Fettalkohol mit 14 EO | | | | | | | 2 | | | |
| Talgfettalkohol mit 5 EO | 1,8 | 2,5 | 2 | 2 | 2 | 2 | | | | |
| Glycerin mit 19 EO | | | | | | | | | | 3 |
| C₁₂₋₁₈-Fettsäureseife-Na | 0,8 | 4 | 3 | 4 | 1 | 1 | | 5 | 5 | 2 |
| Tripolyphosphat | | | | 10 | 5 | | | | | |
| Zeolith NaA | 23,5 | 30 | | 25 | | 5 | 38 | | | 35 |
| krist. Schichtsilikat | | | 35 | 8 | | | | | | |
| Bentonit | | | | 5 | | | | | | |
| amorphes Natriumdisilikat | 3 | 3 | 7 | 3 | 3 | 3 | 5,5 | | | 3 |
| Citrat | | 8 | 16 | | | | | | | |
| Natriumcarbonat | 12,6 | 8 | | 11 | 5 | 5 | 3 | 25 | 30 | 9 |
| Natriumbicarbonat | | | | | | | | 25 | | |
| Perborat-Monohydrat | 16 | | | 5 | 16 | 16 | | | | |
| Perborat-Tetrahydrat | | | | | | | 25 | | 15 | |
| Tetraacetylethylendiamin | 5,5 | | | | 5,5 | 5,5 | 2 | | | |
| Carboxymethylcellulose | 0,25 | | | | | | | 1,5 | | |
| Polyvinylpyrrolidon | | | | 0,8 | | | | | | |
| Enzymgranulat | 1 | | | 0,6 | 1 | 1 | 1 | | | 0,45 |
| Entschäumergranulat | 0,2 | | | | 0,2 | 0,2 | 0,2 | | | |
| optischer Aufheller | 0,2 | | | | 0,2 | 0,2 | 0,2 | | | |
| Wasser, Salze, Parfüm | Rest | Rest | Rest | Rest | Rest | Rest | Rest | Rest | Rest | Rest |
| erfindungsgem. Polymer nach Beispiel 2 | 5,5 | 4 | 3 | 3,5 | 5 | 5 | 2 | 20 | 15 | 3 |

Die erfindungsgemäßen Formulierungen können als Textilwaschmittel im Haushaltsbereich und in gewerblichen Reinigungsprozessen verwendet werden. Die in den Formulierungen enthaltenen erfindungsgemäßen Polymerisate weisen ein hervorragendes Bindevermögen für mehrwertige Metallionen und ein hohes Dispergiervermögen auf, so daß teilweise auf die Verwendung von wasserenthärtenden Silikaten, wie Zeolithen oder kristallinen Natrium-Schichtsilikaten, verzichtet werden kann. Die erfindungsgemäßen Waschmittel bewirken eine gute Schmutzablösung und Schmutzdispergierung und führen nur zu einer geringen Inkrustierung beim Waschen der Textilien mit hartem Wasser. Bei den Mitteln kann es sich um stark schäumende Formulierungen handeln, wie sie bei der Handwäsche verwendet werden, oder auch um schaumregulierende Tensidsysteme, die in der Maschinenwäsche Verwendung finden.

Ein weiterer Gegenstand der Erfindung sind Reinigungsmittel für harte Oberflächen und insbesondere phosphatfreie Reinigungsmittel für das maschinelle Geschirrspülen, bei denen die erfindungsgemäßen Polymerisate aufgrund ihrer komplexierenden und dispergierenden Eigenschaften vorteilhaft verwendet werden.

Klassische Maschinengeschirreinigungsmittel sind von hoher Alkalität und bestehen im wesentlichen aus Inhaltsstoffen vom Typ Alkalitriphosphat (15-30 Gew.%), Alkalimetasilikat (20-60 Gew.%), Wasserglas (0-5 Gew. %), Alkalicarbonat (5-30 Gew. %), nichtschäumende Tenside (0,5-2 Gew. %), Bleichmittel (4-7 Gew. %) und Chlorabspalter (0-5 Gew. %).

Die neue Generation der ökologischen Reiniger ist phosphatfrei und niederalkalisch auf Basis von Citraten, Polycarboxylaten und Carbonaten und versucht chlorabspaltende Substanzen zu vermeiden.

Die erfindungsgemäßen Formulierungen für phosphatfreie Maschinengeschirreiniger enthalten 1 - 60 Gew. % der erfindungsgemäßen Polymerisate, 5 - 90 Gew. % Alkalibildner, 0-60 Gew. % Dispergier- und Komplexiermittel, 0 - 10 Gew. % schwachschäumende Tenside und 0 - 50 Gew. % weitere Zusatzstoffe.

Geeignete Alkalibildner sind vor allem wasserlösliche Alkalisilikate wie Alkalimetasilikate, Alkalidisilikate und kristalline Alkalischichtsilikate. Zur Gruppe der Alkalibildner zählen weiterhin alkalisch reagierende Salze, wie beispielsweise Alkalihydroxide und Alkalicarbonate und Alkalihydrogencarbonate. Die verwendete Menge dieser alkalibildenden Substanzen liegt vorzugsweise zwischen 5 und 70 Gew. % und besonders bevorzugt zwischen 5 und 55 Gew. %.

Die Formulierungen können ebenfalls Dispergier- und Komplexiermittel enthalten. Geeignete Produkte sind beispielsweise Citrate, Phosphonate, Homo- und Copolymerisate der Acrylsäure, Isoserindiessigsäure, Ethylendiamintetraessigsäure und Nitrilotriessigsäure sowie die Alkalisalze der vorstehend genannten Verbindungen. Wenn man derartige Verbindungen in die Rezepturen aufgenommen hat, so liegt deren Menge vorzugsweise zwischen 5 und 50 Gew. %. Die Verwendung von Natriumcitrat in Konzentrationen von 10 - 40 Gew. % ist besonders bevorzugt.

Die Formulierungen können außerdem schwachschäumende Tenside, vorzugsweise in Mengen von 0,5 - 5 Gew. % enthalten. Besonders bevorzugt sind schaumarme nichtionische Tenside, wie zum Beispiel Ethylenoxid(1-20 Mol)-Propylenoxid(1-20 Mol)-Additionsprodukte an 1 Mol aliphatische Alkohole, Carbonsäuren, Fettamine, Carbonsäureamide und Alkansulfonamide mit 10 - 20 Kohlenstoffatomen, bzw. mit Alkylgruppen endverschlossene Verbindungen der vorgenannten Substanzen. Darüber hinaus werden auch C₈₋₂₂-Alkylpolyglycoside und nur teilweise wasserlösliche Polyglykolether eingesetzt, bzw. mit den nichtionischen Tensiden kombiniert. Besonders bevorzugt ist ein Tensidgehalt von max. 2 Gew. %.

Weiterhin können die Formulierungen noch andere Zusatzstoffe enthalten. Derartige Zusatzstoffe sind Bleichmittel auf Sauerstoffbasis, wie z.B. Perborate und Percarbonate und persaure Salze organischer Säuren, wie z.B. Perbenzoate, die in Mengen von 0,5 - 20 Gew. % und vorzugsweise zu 5 - 15 Gew. % enthalten sind. Chlorabspaltende Bleichmittel werden, wenn überhaupt, in Mengen von 0 - 5 Gew. % eingesetzt. Der Zusatz von bleichmittelstabilisierenden Zusätzen, wie etwa Magnesiumsalze und/oder Borate ist vorteilhaft.

Die Sauerstoffbleiche wird durch die Verwendung von geeigneten Bleichaktivatoren verbessert bzw. setst bereits bei niedrigen Waschtemperaturen ein. Vorzugsweise werden hierzu tetraacerylierte Diamine, wie etwa TAED (Tetraacetylethylendiamin) in Mengen von 0 -10 Gew. % eingesetzt, besonders bevorzugt sind Einsatzmengen von max. 5 Gew. %

Zur besseren Ablösung eiweiß- oder stärkehaltiger Speisereste können die Formulierungen Enzyme vom Typ der Protease, Amylase, Lipase und Cellulase enthalten. Vorteilhafte Zusatzmengen bewegen sich zwischen 0,1 und 5 Gew. %, besonders bevorzugt sind Einsatzmengen von max. 2 Gew. %.

Als weitere Inhaltsstoffe der erfindungsgemäßen Geschirreinigungsmittel können Duft- und Farbstoffe, Entschäumer, Rieselhilfsmittel, Silberschutzmittel, Stell- und Streckmittel problemlos zugesetzt werden.

Bei den erfindungsgemäßen Geschirreinigungsmitteln kann es sich um flüssige Produkte, pulverförmige Ausführungen und Granulate oder zu Blöcken bzw. Tabletten gepreßte Produkte handeln.

Die Herstellung der flüssigen Formulierungen kann durch Abmischen der Komponenten erfolgen. Die pulverförmigen Produkte werden meist durch Mischen der pulverförmigen Bestandteile und gegebenenfalls durch Aufsprühen der flüssigen Bestandteile bzw. durch Sprühtrocknen eines wäßrigen, flüssigen bis pastenförmigen Ansatzes der Ausgangskomponenten hergestellt. Zur Produktion von Tabletten werden die Rohstoffe zunächst gemischt und/oder in Sprühnebelmischgeräten voraufbereitet und anschließend in Tablettiermaschinen verpreßt.

Die in den Formulierungen enthaltenen erfindungsgemäßen Polymerisate zeigen ein hervorragendes Bindevermögen für mehrwertige Metallionen und ein sehr gutes Dispergier- und Schmutztragevermögen. Sie wirken daher vorteilhaft in den erfindungsgemäßen Geschirreinigungsmitteln, in dem sie die Schmutzablösung und Schmutzdispergierung unterstützen und Ablagerungen von Wasserhärtebestandteilen auf dem Spülgut und auf den Maschinenteilen verringern.
Aus den erfindungsgemäßen Polymerisaten wurden Maschinengeschirreinigungsmittel (R1-R8) folgender Zusammensetzung hergestellt (Angaben in Gew. %):

| Rohstoffe | R1 | R2 | R3 | R4 | R5 | R6 | R7 | R8 |
|---|---|---|---|---|---|---|---|---|
| C₁₂₋₁₄-Fettalkohol mit 4EO | 2 | 2 | 2 | | | | | |
| C₁₂₋₁₈-Fettalkohol mit IEO2PO | | | | 0,9 | 0,9 | 2 | 1 | |
| C₁₂₋₁₄-Kokosfettalk.-1PO-3EO | | | | | | | | 2 |
| Octyl-1,2PO,6EO-butylether | | | | | | | | 2 |
| erfindungsgem. Polymerisat | 10 | 8 | 10 | 10 | 5 | 8 | 5 | 15 |
| gemäß Beispiel 2 | | | | | | | | |
| Natriumcitrat Dihydrat | | 35 | | 30 | 40 | 30 | 35 | 15 |
| Natriummetasilikat Pentahydrat | 50 | | 50 | | | | | |
| Natriumdisilikat | | 20 | | | | 10 | | |
| Natriumhydroxyd | 10 | | | | | | | |
| Natriumcarbonat | 28 | 20 | 5 | 13 | 6 | 40 | 5 | 10 |
| Natriumhydrogencarbonat | | | | 35,5 | 30,1 | | 38 | 10 |
| Natriumperborat Monohydrat | | 10 | | 5 | | 7 | 10 | 3 |
| Natriumpercarbonat | | | | | 12 | | | |
| Tetraacetylethylendiamin | | 3 | | 2 | 3 | 2 | 4 | 1 |
| Enzyme (Amylase/Protease=1:1) | | 2 | | 3 | 2 | 1 | 2 | 1 |
| Natriumsulfat | | | 33 | | | | | |
| Parfümöl | | | | 0,6 | 0,6 | | | 1 |
| Mangan(II)sulfat ad 100 Gew. % Wasser | | | | | 0,4 | | | |

Die erfindungsgemäßen Polymerisate sind auch als Hilfsmittel bei der Veredlung von Textilien oder Textilmaterialien vorteilhaft verwendbar. So beim Abkochen bzw. Beuchen von Baumwolle unter Bindung der Härtebildner und unter Dispergierung der Baumwollbegleitsubstanzen bzw. Verunreinigungen, deren Wiederaufziehen verhindert wird und indem sie die Wirkung von Tensiden unterstützen. Die erfindungsgemäßen Polymerisate werden als Stabilisatoren beim Bleichen mit Wasserstoffperoxid eingesetzt; bei der zusätzlicher Verwendung von stabilisierenden Silikaten verhindern sie Silikatabschei-dungen.

Die erfindungsgemäßen Polymerisate sind auch als Hilfsmittel in Wasch- und Färbe-flotten kontinuierlicher und diskontinuierlicher Art anwendbar, wobei der unfixierte Farbstoff entfernt wird und gute Wasch-, Wasser- und Reibechtheiten erreicht werden. Im Falle von Polyesterfasern wird zusätzlich die Abtrennung von sich herauslösenden und den Färbeprozess störenden oligomeren Polyesterbestandteilen durch die dispergierende Wirkung der Polymeren erreicht.

Die erfindungsgemäßen Polymerisate fördern beim Färben von Zellulosefasern die Löslichkeit von Reaktiv- und Direktfarbstoffen und bewirken eine verbesserte Egalität des Farbstoffes auf der Faser, insbesondere bei Anwesenheit hoher Salzmengen in der Flotte. Sie können als Mittel zum Anteigen der Farbstoffe in der Küpenfärberei oder als Dispergatoren im Pigmentierungsbad vorteilhaft eingesetzt werden. Bei Schwefel-färbungen unterstützen sie die Feinverteilung der Farbstoffe und verhindern das Bronzieren.

Beim Färben von Synthesefasern wird durch die erfindungsgemäßen Polymerisate die Bildung von Agglomeraten aus Dispersionsfarbstoffen verhindert, so daß Ablagerungen in den Wickelkörpern vermieden werden.

Bei der Nachwäsche von Echtfärbungen und Drucken werden durch die erfindungs-gemäßen Polymerisate nicht fixierte Farbstoffanteile gebunden und das Wiederaufziehen wird drastisch reduziert. Durch die erhöhte Diffusion der Farbstoffe zur Waschflotte wird durch die Polymerisate eine optimale Entfernung unfixierter Farbstoffe unter Einsparung von Wasser und Energie erreicht.

Die erfindungsgemäßen Produkte stellen so beim Nachbehandeln von Naphtholfärbungen einen wirkungsvollen Ersatz für Polyphosphate dar, bei der Nachwäsche von Reaktivdrucken werden Ausfällungen von Calciumalginat verhindert.

Die dispergierende und komplexbildende Wirkung der erfindungsgemäßen Polymerisate erfolgt dabei ohne Remobilisierung von Schwermetallverbindungen, sowohl aus Farbstoffchromophoren (Reaktiv-, Metallkomplexfarbstoffen) als auch aus an sich wasserunlöslichen, natürlichen oder industriell bedingten Ablagerungen.

Die Einsatzmengen können in der Praxis gegenüber herkömmlichen Hilfsmitteln, wie Polyacrylaten bis um das 3- bis 5-fache reduziert werden.

Die erfindungsgemäßen Polymerisate können in Kombination mit Tensiden, insbesondere anionischen Tensiden, in unneutralisierter Form (als saure Einstellung) in Kombination mit komplexierend wirkenden organischen Säuren, wie Citronensäure, Milchsäure, Gluconsäure und Phosphonsäuren und Tensiden, insbesondere anionischen Tensiden eingesetzt werden.

Derartige Kombinationen werden beispielsweise vorteilhaft anstelle der bisher üblichen mehrstufigen, in jeweils separaten Bädern erfolgenden Vorbehandlung, beispielsweise von hochbelasteter Baumwolle oder Baumwolle-Linters, mit den Stufen saure Extraktion, Choritbleiche, Abkochen und H₂O₂-Bleiche, in der Weise vorgenommen, daß die Vorbehandlung in nur einem veränderbaren Behandlungsbad unter Zusatz der erfin-dungsgemäßen Polymerisate erfolgt.

Diese erfindungsgemäße Verfahrensweise läßt sich auch auf Continue-Prozesse über-tragen. Die genannten Verfahrensweisen vermeiden die Bildung von unerwünschten organischen Halogenverbindungen und entsprechende Umweltbelastungen.

Die Polymerisate eignen sich als Zusätze zum Entschlichten von Wasserhärte-empfindlichen Faserschlichten, z.B. Polyester-Schlichten.

Die erfindungsgemäßen Produkte zeigen darüber hinaus eine gute bzw. ausgezeichnete Wirksamkeit als Hilfsmittel bei der Lederherstellung wenn sie u.a. in den Prozessen der Weiche, beim Äschern, in den Waschprozessen nach dem Äschern sowie bei der Entkälkung, insbesondere bei der CO₂-Entkälkung eingesetzt werden.

Bei der Chromgerbung bewirken sie eine erhöhte Chromaufnahme durch das Leder, wobei erfindungsgemäße Polymerisate mit Molekulargewichtsmitteln von unter 5000 g/Mol besonders bevorzugt sind. In der Nachgerbung erzeugen die Polymerisate der Erfindung füllende und weichmachende Eigenschaften des Leders, wobei die Copolymere mit Anteilen von 0,5 - 10 Gew. % hydrophobierend wirkenden bzw. tensidischen Charakter verleihenden Monomeren nach e) besonders bevorzugt sind.

Aufgrund der dispergierenden und Schwermetall-komplexierenden aber nicht remo-bilisierenden Eigenschaften eignen sich die erfindungsgemäßen Polymerisate weiterhin in vorteilhafter Weise als Hilfsmittel bei der Papierherstellung, beispielsweise zur Herstellung von Dispersionen von Pigmenten und Füllstoffen, wie Kaolin, Calciumcarbonat, Satinweiß, Talkum, Titandioxid, Aluminiumhydroxid und Bariumsulfat, sowie zur Herstellung von Streichfarben, wobei Füllstoff- und Pigmentslurries und Streich-farben mit hohem Feststoffgehalt und hoher Lagerstabilität erhalten werden.

Die erfindungsgemäßen Polymeren können in Kombination mit anderen Hilfsmitteln eingesetzt werden.

Die höher molekularen Polymerisate sind für andere Verwendungszwecke geeignet, beispielsweise als Verdickungsmittel, als Hilfsmittel bei der Papierherstellung, als Hilfsmittel in der Wasser - und Abwasseraufbereitung oder als Bohrspülungsadditive.

In den folgenden Beispielen werden die Herstellung und Eigenschaften der erfindungsgemäßen Polymerisate erläutert. Anwendungsorientierte Untersuchungen zeigen die hohe Wirksamkeit der Polymerisate bei der Inhibierung von Wasserhärte, der ausgezeichneten Ca²⁺/Fe³⁺-Bindefähigkeit bzw. der CaCO₃-Dispergierfähigkeit und der Komplexierung von Schwermetallen bei unterschiedlichen Temperaturen und pH-Werten sowie im sehr guten Schmutztragevermögen bei Waschvorgängen (Hydrophiles Suspendiervermögen). Darüber hinaus wird neben der Pigmentdispergierung auch die Anwendung bei der Lederherstellung am Beispiel der Nachgerbung und bei textilchemischen Veredlungsprozessen am Beispiel der Bleichbadstabilisierung, Färbung und Dispergierung gezeigt.

### Herstellungsbeispiele

### Beispiel 1

In einen Polymerisationsreaktor aus Glas, versehen mit Heizbad, KPG-Rührer, Dosiereinrichtung für flüssige Stoffe und Rückflußkühler werden 114,8g Maleinsäureanhydrid, 2,97g Natriummethallylsulfonat und 12,6mg Ammoniumeisen(II)sulfat in 283,2g demineralisiertes Wasser gegeben. Man versetzt die Mischung mit 168,5g [50 Gew.%] Natronlauge und erhitzt bis zur klaren Lösung auf 90°C. Gleichbeginnend werden zwei Lösungen über einen Zeitraum von 4h in die Vorlage dosiert. Lösung I besteht aus 146,5g Acrylsäure, 35,4g Vinylacetat, 65,1g [50 Gew.%] Natronlauge und 45,0g demineralisiertem Wasser. Lösung II besteht aus 50,55g [35 Gew%] Wasserstoffperoxid, 4,0g Natriumperoxodisulfat und 35,0g Wasser. Nach Abschluß der Dosierung wird noch weitere 60 Minuten bei 90°C gerührt und aus dem Ansatz anschließend über eine Destillationsbrücke 31g wäßrige Phase abdestilliert. Man kühlt auf 40°C ab, stellt mit 54,8g [50 Gew%] Natronlauge auf pH 10 ein und kocht 3 Stunden unter Rückfluß. Die klare, abgekühlte, schwach gelbe Lösung wird mit 46,5g konz. Salzsäure auf pH 6,8 eingestellt. Das Endprodukt besitzt einen Trockensubstanzgehalt von 39,0%, das Molgewicht liegt bei Mw = 12000 g/mol.

### Beispiel 2

Die im Reaktor vorgelegten bzw. eindosierten Mengen ändern sich gegenüber Beispiel 1 in folgender Weise:
Vorlage: 229,6g Maleinsäureanhydrid, 450,6g Wasser, 337,0g [50 Gew%] Natronlauge, 12,2g Natriummethallylsulfonat und 25,2mg Ammoniumeisen(II)sulfat.
Dosierlösung I: 293,0g Acrylsäure, 90g Wasser, 130,2g [50 Gew%] Natronlauge und 70,8g Vinylacetat.
Dosierlösung II: 8,0g Natriumperoxodisulfat, 135,2g [35 Gew%] Wasserstoffperoxid in 81,8g Wasser.
Nach dem Ende der Dosierung wird noch 30 Minuten nachgerührt, anschließend 56,1g Flüssigkeit abdestilliert. Das verseifte und neutralisierte Polymerisat mit einem Trockensubstanzgehalt von 43,1 % hat eine Viskosität von 540mPa.s. Das Molgewicht liegt bei Mw = 11000 g/Mol.
Der Restmonomeranteil des Produkt beträgt 0,015% freie Maleinsäure, 0,037% Fumarsäure, 0,01% Natriummethallylsulfonat und 0,002% Acrylsäure.

### Beispiel 3

In Abänderung zu Beispiel 1 werden in diesem Beispiel die folgenden Mengen vorgelegt bzw. eindosiert:
Vorlage: 114,8 g Maleinsäureanhydrid, 283,2g Wasser, 168,5g [50 Gew%] Natronlauge, 8,91g Natriummethallylsulfonat und 12,6mg Ammoniumeisen(II)sulfat.
Dosierlösung I: 146,5g Acrylsäure, 45,0g Wasser, 65,1g [50 Gew%] Natronlauge und 35,4g Vinylacetat.
Dosierlösung II: 50,6g [35 Gew%] Wasserstoffperoxid, 4,0g Natriumperoxodisulfat in 35,0g Wasser. Nach Abschluß der Dosierung und einer 30 minütigen Nachrührzeit werden über eine Destillationsbrücke 36,1g wäßrige Phase abdestilliert und die noch schwach saure Polymerisatlösung (pH 5,2) 6 Stunden am Rückfluß gehalten. Nach der Neutralisation erhält man eine Polymerisatlösung, die einen Trockensubstanzgehalt von 41,6% besitzt und neben 0,03% Maleinsäure noch 0,10% Fumarsäure enthält. Das Molekulargewicht beträgt Mw = 10200 g/Mol.

### Beispiel 4

Das Beispiel 2 wird mit den folgenden Mengenänderungen wiederholt:
Vorlage: 229,6g Maleinsäureanhydrid, 31,3g Natriummethallylsulfonat, 337,0g [50 Gew%] Natronlauge und 25,2mg Ammoniumeisen(II)sulfat in 450,6g demineralisiertem Wasser.
Dosierlösung I: 293,0g Acrylsäure, 70,8g Vinylacetat, 130,2g [50 Gew%] Natronlauge und 90,0g Wasser.
Dosierlösung II: 8,0g Natriumperoxodisulfat, 135,2g [35 Gew%] Wasserstoffperoxid und 81,8g Wasser.
Nach dem Ende der Dosierung und einer Nachrührzeit von 30 Minuten werden aus dem Ansatz 1g Vinylacetat und 55g wäßrige Phase abdestilliert. Das verseifte und neutralisierte Polymerisat hat einen Trockensubstanzgehalt von 42,4% und eine Viskosität von 430mPa.s.

### Beispiel 5

Die Herstellung von Beispiel 5 erfolgt analog zu Beispiel 2. Die im Reaktor vorgelegten bzw. eindosierten Mengen ändern sich in folgender Weise:
Vorlage: 229,6g Maleinsäureanhydrid, 66,0g Natriummethallylsulfonat, 337,0g [50 Gew%] Natronlauge und 25,2mg Ammoniumeisen(II)sulfat in 490,0 g Wasser.
Dosierstrom I: 293,0g Acrylsäure, 70,8g Vinylacetat, 130,2g [50 Gew%] Natronlauge und 90,0g Wasser.
Dosierstrom II: 8,0g Natriumperoxodisulfat, 135,2g [35 Gew%] Wasserstoffperoxid und 81,8g Wasser.
Nach dem Ende der Dosierung wird noch 30 Minuten bei 90°C nachgerührt und über eine Destillationsbrücke 52,9g wäßrige Phase abdestilliert. Die klare Lösung des verseiften und neutralisierten Polymerisats hat einen Trockensubstanzgehalt von 44,1% und ein Molekulargewicht von Mw = 10.000 g/mol.

### Beispiel 6

In einem Polymerisationsversuch entsprechend der Herstellungsvorschrift des Beispiels 2 werden die folgenden Mengen vorgelegt bzw. eindosiert:
Vorlage: 91,8g Maleinsäureanhydrid, 59,3g Natriummethallylsulfonat, 134,8g [50 Gew%] Natronlauge und 12,6mg Ammoniumeisen(II)sulfat in 225,3g Wasser.
Dosierstrom I: 117,2g Acrylsäure, 28,3g Vinylacetat, 52,1g [50 Gew%] Natronlauge und 45,0g Wasser.
Dosierstrom II: 4,0g Natriumperoxodisulfat, 67.6g [35 Gew%] Wasserstoffperoxid und 40,9g Wasser.
Nach dem Ende der Dosierung und einer Nachrührzeit von 30 Minuten bei 90°C werden 30,5g wäßrige Phase abdestilliert. Das verseifte und neutralisierte Polymerisat hat eine Trockensubstanz von 41,2% und ein Molekulargewicht von Mw = 5.500 g/mol.

### Beispiel 7

Die Herstellung von Beispiel 7 erfolgt analog zu Beispiel 2. Es ändern sich jedoch die im Reaktor vorgelegten bzw. eindosierten Mengen in folgender Weise:
Vorlage: 229,6g Maleinsäureanhydrid, 11,24g Natriummethallylsulfonat, 337,0g [50 Gew%] Natronlauge und 25,2g Ammoniumeisen(II)sulfat und 460,6g Wasser.
Dosierlösung I: 293,0g Acrylsäure, 27,6g Vinylacetat, 130,2g [50 Gew%] Natronlauge und 90,0g Wasser.
Dosierlösung II: 8,0g Natriumperoxodisulfat, 135,2g [35 Gew%] Wasserstoffperoxid und 81,8g Wasser. Im Anschluß an die Dosierung und der 30 minütigen Nachrührzeit werden aus dem Ansatz 49,8g wäßrige Phase abdestilliert. Die verseifte und neutralisierte Polymerisatlösung hat einen Trockensubstanzgehalt von 37,1%, das Molekulargewichtsmittel beträgt Mw = 6500 g/Mol.

### Beispiel 8

Mit Ausnahme von 29,0g Natriummethallylsulfonat entspricht die Durchführung dieses Versuches der des Beispiels 7. Die klare Polymerlösung besitzt einen Trockensubstanzgehalt von 41,2%, eine Viskosität 310 mPa.s und ein Molekulargewicht Mw = 6.000 g/mol.

### Beispiel 9

Die Herstellung von Beispiel 9 erfolgt wie unter Beispiel 2 beschrieben. Die im Reaktor vorgelegten bzw. eindosierten Mengen ändern sich jedoch wie folgt:
Vorlage: 109,8g Maleinsäureanhydrid, 29,7g Natriummethallylsulfonat, 161,1g [50 Gew%] Natronlauge und 12,6g Ammoniumeisen(II)sulfat und 200,0g Wasser.
Dosierlösung I: 142,4g Acrylsäure, 14,8g Vinylacetat, 63,2g [50 Gew%] Natronlauge und 70,3g Wasser.
Dosierlösung II: 4,0g Natriumperoxodisulfat, 67,6g [35 Gew%] Wasserstoffperoxid und 40,9g Wasser. Das verseifte und neutralisierte Produkt ist klar und hat einen Trockensubstanzgehalt von 42,6% und eine Viskosität von 340mPa.s.

### Beispiel 10

Die Herstellung erfolgt gemaß Beispiel 2, wobei die folgenden Mengenänderung vorgenommen werden:
Vorlage: 44,5g Maleinsäureanhydrid, 29,7g Natriummethallylsulfonat, 65,3g [50 Gew%] Natronlauge und 12,6g Ammoniumeisen(II)sulfat und 170,3g Wasser.
Dosierlösung I: 207,7g Acrylsäure, 14,8g Vinylacetat, 92,2g [50 Gew%] Natronlauge und 100,0g Wasser.
Dosierlösung II: 4,0g Natriumperoxodisulfat, 67,6g [35 Gew%] Wasserstoffperoxid und 40,9g Wasser. Im Anschluß an die Dosierung und die 30 minütige Nachrührzeit werden aus dem Ansatz 30,0g wäßrige Phase abdestilliert. Das verseifte, neutralisierte Produkt besitzt einen Trockensubstanzgehalt von 41,5% und eine Viskosität von 860mPa.s.

### Beispiel 11

Die Herstellung von Beispiel 11 erfolgt entsprechend Beispiel 2. Die im Reaktor vorgelegten bzw. eindosierten Mengen ändern sich jedoch wie folgt:
Vorlage: 44,5g Maleinsäureanhydrid, 118,68g Natriummethallylsulfonat, 65,3g [50 Gew%] Natronlauge und 12,6g Ammoniumeisen(II)sulfat in 240,0g Wasser.
Dosierlösung I: 118,68g Acrylsäure, 14,8g Vinylacetat, 52,7g [50 Gew%] Natronlauge und 30,0g Wasser.
Dosierlösung II: 4,0g Natriumperoxodisulfat, 67,6g [35 Gew%] Wasserstoffperoxid und 40,9g Wasser. Nach dem Ende der Dosierung wird der Ansatz noch 30 Minuten bei 90°C gehalten und anschließend 28,2g wäßrige Phase abdestilliert. Das verseifte, neutralisierte P Produkt mit einem Trockensubstanzgehalt von 43,8% hat eine Viskosität von 95mPa.s.

### Beispiel 12

In einem Polymerisationsversuch entsprechend der Herstellungsvorschrift des Beispiels 2 werden die folgenden Mengen vorgelegt bzw. eindosiert:
Vorlage: 104,4g Maleinsäureanhydrid, 44,5g Natriummethallylsulfonat, 153,3g [50 Gew%] Natronlauge und 12,6g Ammoniumeisen(II)sulfat und 230,0g Wasser.
Dosierlösung I: 132,9g Acrylsäure, 14,8g Vinylacetat, 59,0g [50 Gew%] Natronlauge und 40,0g Wasser.
Dosierlösung II: 4,0g Natriumperoxodisulfat, 67,6g [35 Gew%] Wasserstoffperoxid und 40,9g Wasser. Nach dem Ende der Dosierung wird noch 30 Minuten bei 90°C gehalten und anschließend aus dem Ansatz 30,3g wäßrige Phase abdestilliert. Die verseifte, neutralisierte Polymerisatlösung hat einen Trockensubstanzgehalt von 42,4%.

### Beispiel 13

Die Herstellung von Beispiel 13 erfolgt analog zu Beispiel 2. Die im Reaktor vorgelegten bzw. eindosierten Mengen ändern sich jedoch in folgender Weise:
Vorlage: 125,2g Maleinsäureanhydrid, 5,93g Natriummethallylsulfonat, 183,8g [50 Gew%] Natronlauge und 12,6g Ammoniumeisen(II)sulfat und 220,0g Wasser.
Dosierlösung I: 159,6g Acrylsäure, 5,9g Vinylacetat, 70,9g [50 Gew%] Natronlauge und 60,0g Wasser.
Dosierlösung II: 4,0g Natriumperoxodisulfat, 67,6g [35 Gew%] Wasserstoffperoxid und 40,9g Wasser. Nach dem Ende der Dosierung wird noch 30 Minuten bei 90°C gehalten und nachfolgend aus dem Ansatz: 36,4g wäßrige Phase abdestilliert. Die verseifte, neutralisierte und klare Produktlösung mit einem Trockensubstanzgehalt von 42,3% hat eine Viskosität von 660mPa.s.

### Beispiel 14

Die Herstellung erfolgt gemäß Beispiel 2 wobei die folgenden Mengenänderung vorgenommen werden:
Vorlage: 121,4g Maleinsäureanhydrid, 14,8g Natriummethallylsulfonat, 178,1g [50 Gew%] Natronlauge und 12,6g Ammoniumeisen(II)sulfat und 225,0g Wasser.
Dosierlösung I: 154,6g Acrylsäure, 5,9g Vinylacetat, 68,6g [50 Gew%] Natronlauge und 45,0g Wasser.
Dosierlösung II: 4,0g Natriumperoxodisulfat, 67,6g [35 Gew%] Wasserstoffperoxid und 40,9g Wasser. Die verseifte, neutralisierte, klare Produktlösung mit einem Trockensubstanzgehalt von 42,1% bat eine Viskosität von 360mPa.s. Das Molekulargewicht beträgt Mw = 8000 g/Mol.

### Beispiel 15

In einem Polymerisationsversuch entsprechend der Herstellungsvorschrift des Beispiels 1 werden die folgenden Mengen vorgelegt bzw. eindosiert:
Vorlage: 114,8g Maleinsäureanhydrid, 29,7g Nathummethallylsulfonat, 168,5g [50 Gew%] Natronlauge und 12,6g Ammoniumeisen(II)sulfat in 225,0g Wasser.
Dosierlösung I: 146,6g Acrylsäure, 5,9g Vinylacetat, 65,1g [50 Gew%] Natronlauge und 45,0g Wasser.
Dosierlösung II: 4,0g Natriumperoxodisulfat, 67,6g [35 Gew%] Wasserstoffperoxid und 40,9g Wasser. Im Anschluß an die Dosierung und der 30 minütigen Nachrührzeit werden aus dem Ansatz 29,6g wäßrige Phase abdestilliert. Die verseifte, klare Polymerisatlösung mit einem Trockensubstanzgehalt von 42,0% hat eine Viskosität von 330mPa.s.

### Beispiel 16

Die Herstellung von Beispiel 16 erfolgt wie unter Beispiel 2 beschrieben. Die im Reaktor vorgelegten bzw. eindosierten Mengen ändern sich jedoch wie folgt:
Vorlage: 114,8g Maleinsäureanhydrid, 14,8g Amidopropansulfonsäure, 168,5g [50 Gew%] Natronlauge und 12,6g Ammoniumeisen(II)sulfat und 225,0g Wasser.
Dosierlösung I: 146,6g Acrylsäure, 35,4g Vinylacetat, 65,1g [50 Gew%] Natronlauge und 45,0g Wasser.
Dosierlösung II: 4,0g Natriumperoxodisulfat, 67,6g [35 Gew%] Wasserstoffperoxid und 40,9g Wasser. Nach dem Ende der Dosierung wird noch weitere 30 Minuten bei 90°C gerührt und aus dem Ansatz 30,7g wäßrige Phase abdestilliert. Das verseifte und neutralisierte Polymerisat mit einem Trockensubstanzgehalt von 41,9% hat ein Molekulargewicht von Mw = 10.500 g/mol.

### Beispiel 17

In einem Polymerisationsversuch entsprechend dem Beispiel 2 werden die folgenden Mengen und Komponenten vorgelegt bzw. eindosiert:
Vorlage: 114,8g Maleinsäureanhydrid, 168,5g [50 Gew%] Natronlauge und 12,6g Ammoniumeisen(II)sulfat und 225,3g Wasser.
Dosierlösung I: 146,6g Acrylsäure, 35,4g Vinylacetat, 65,1g [50 Gew%] Natronlauge, 45,0g Wasser und 5,94g [35 Gew%] Vinylsulfonat.
Dosierlösung II: 4,0g Natriumperoxodisulfat, 67,6g [35 Gew%] Wasserstoffperoxid und 40,9g Wasser. Nach dem Ende der Dosierung wird noch weitere 30 Minuten bei 90°C gerührt, aus dem Ansatz 36,5g wäßrige Phase abdestilliert. Das verseifte, neutralisierte Polymerisat mit einem Trockensubstanzgehalt von 41,0% hat ein Molekulargewicht von Mw = 10.300 g/mol.

### Beispiel 18

Die Herstellung von Beispiel 18 erfolgt wie unter Beispiel 2 beschrieben. Die im Reaktionsreaktor vorgelegten ,bzw. eindosierten Mengen und Komponenten ändern sich jedoch wie folgt:
Vorlage: 114,8g Maleinsäureanhydrid, 6,1g Natriummethallylsulfonat, 6,1g Allylalkohol-10-EO, 168,5g [50 Gew%] Natronlauge und 225,3g Wasser.
Dosierlösung I: 146,5g Acrylsäure, 35,4g Vinylacetat, 65,0g [50 Gew%] Natronlauge und 45,0g Wasser.
Dosierlösung II: 4,0g Natriumperoxodisulfat, 67,6g [35 Gew%] Wasserstoffperoxid und 40,9g Wasser.
Im Anschluß an die Dosierung und der 30 minütigen Nachrührzeit werden aus dem Ansatz 28,4g wäßrige Phase abdestilliert. Die verseifte, neutralisierte Polymerisatlösung mit einem Trockensubstanzgehalt von 42,9% hat eine Viskosität von 560mPa.s.

### Beispiel 19:

Hier wird das Beispiel 2 mit der Änderung wiederholt, daß 1,8 g Natriumdodecansulfonat in Form einer 20%igen Lösung mit in die Reaktorvorlage gegeben werden. Die erhaltene klare Polymerlösung hat gegenüber dem Beispiel 2 eine deutlich verringerte Oberflächenspannung.

### Beispiel 20:

Hier wird wie im Beispiel 2 polymerisiert, jedoch werden die Einsatzmengen der Initiatoren wie folgt geändert: Natriumpersulfat 10,6 g und Wasserstoffperoxid [35 Gew. %] 179,8 g. Es entsteht ein niedrigviskoses, klares Polymerisat. Der Trockensubstanzgehalt beträgt 42,9 %.

### Vergleichsbeispiel 1

Dieses Vergleichsbeispiel beschreibt die Herstellung eines Polymerisates aus Fumarsäure und Natriummethallylsulfonat gemaß der Lehre des US-Patents 3,879,288. In einem 1l-Polymerisationsreaktor, ausgestattet mit KPG-Rührer und Innenthermometer, wird eine Mischung aus 200g Natriummethallylsulfonat und 110g Fumarsäure in 250ml demineralisiertem Wasser vorgelegt. Der Ansatz wird auf 90°C erhitzt und mit 5ml [30 Gew%] Wasserstoffperoxid versetzt. Nach einer Stunde werden nochmals 5ml [30 Gew%] Wasserstoffperoxid zugefügt und zwei weitere Stunden bei 90°C gerührt. Man erhält eine klare Lösung, die einen Trockensubstanzgehalt von 53,6% besitzt und noch 0,8 % freie Fumarsäure und 7,4% freies Natriummethallylsulfonat enthält. Dies entspricht bezüglich des eingesetzten Natriummethallylsulfonat einem Umsatz von 79%. Damit zeigt dieses Beispiel deutlich, daß Polymere, die nach der Patentschrift US 3,879,288 hergestellt werden, wesentlich höhere Restmonomermengen aufweisen als die erfindungsgemäßen Polymerisate.

### Vergleichsbeispiel 2

Das zweite Vergleichsbeispiel ist ein Terpolymer aus Maleinsäure, Acrylsäure und Vinylacetat, dessen Herstellung der deutschen Patentschrift DE 4300772 Beispiel 1 entnommen werden kann. In einem 2l-Polymerisationsreaktor aus Glas werden 63,8g Maleinsäureanhydrid, 260,0g demineralisiertes Wasser, 93,6g [50 Gew%] Natronlauge und 6,3mg Ammoniumeisen(II)sulfat vorgelegt und auf 86°C erhitzt. Zu der klaren Lösung werden über einen Zeitraum von 4 bzw. 4,5 Stunden zwei Lösungen zudosiert. Lösung I(4 Stunden) ist eine Mischung aus 31,4g Acrylsäure, 42,1g Vinylacetat und 100g Wasser. Die zweite Lösung (4,5 Stunden) besteht aus 18,7g [35 Gew%] Wasserstoffperoxid und 100g Wasser. Nach dem Ende der Dosierung von Lösung II ist die Innentemperatur auf 92°C angestiegen, es wird noch 1 Stunde bei dieser Temperatur nachgerührt und mit einem Wasserabscheider 11g wäßrige Phase und 5g Vinylacetat abgezogen. Der Ansatz wird bei 40°C mit Natronlauge auf pH 10 eingestellt, 60 Minuten unter Rückfluß gekocht und mit Salzsäure auf pH 7 neutralisiert. Das Molekulargewichtsmittel des Polymeren beträgt Mw = 22000 g/Mol. Der Gehalt an Restmonomeren liegt bei 2530 ppm Maleinsäure, 300 ppm Fumarsäure, 370 ppm Acrylsäure, <10ppm Vinylacetat.

### Anwendungstechnische Beispiele

### Beispiel 21 - Calciumcarbonat-Dispergierfähigkeit

Ein wesentliches Eigenschaftsmerkmal von Cobuildern in Wasch- und Reinigungsmitteln ist die Fähigkeit zur Verhinderung schwerlöslicher Niederschläge von Erdalkali- oder Schwermetallsalzen, die z. B. Inkrustationen auf Wäschestücken hervorrufen. Für die Bestimmung der Calciumcarbonat-Dispergierfähigkeit (CCDK) [nach Richter Winkler in Tenside Surfactants Detergents 24 (1987) S. 213 - 216] wurde wie folgt vorgegangen:

1 g Produkt (Trockensubstanz) wird in 100 ml Wasser dest. gelöst und mit 10 ml 10%iger Natriumcarbonat-Lösung versetzt. Mit Natronlauge wird ein pH-Wert von 11 eingestellt und mit 0,25 ml Calciumacetat-Lösung bis zum Auftreten einer ersten dauerhaften Trübung titriert. Die Angabe der CCDK erfolgt in mg CaCO₃/g Trockensubstanz

| **Beispiel Nr.** | **CCDK** |
|---|---|
| 1 | 334 |
| 2 | 287 |
| 3 | 318 |
| 4 | 291 |
| 5 | 277 |
| 7 | 378 |
| Vergleichsbeispiel 1 | 44 |
| Vergleichsbeispiel 2 | 273 |
| Handelsprodukt (Polymer auf Basis Maleinsäure/Acrylsäure-Na-Salz) | 258 |

Der Calciumcarbonatdispergiertest zeigt, daß mit den erfindungsgemäßen Polymerisaten bessere CaCO₃-Dispergierkapazitäten erreichbar sind als mit Vergleichsprodukten in Form von marktgängigen Handelsprodukten bzw. hergestellt entsprechend den Lehren der Patentschrift US 3,879,288 und DE 4300772 A1.

### Beispiel 22 - Hampshire-Test:

Eine Lösung aus 1g Produkt (Trockensubstanz) in 100ml Wasser wird mit 2ml 10%ige Natriumcarbonatlösung versetzt und mit Salzsäure oder Natronlauge auf pH 11 eingestellt. Man titriert mit 0,25mol Calciumacetatlösung bis zum Auftreten einer ersten dauerhaften Trübung. Die Angabe erfolgt in mg CaCO₃/g Trockensubstanz:

| **Beispiel Nr.** | **Hampshire** |
|---|---|
| 1 | 563 |
| 2 | 525 |
| 3 | 540 |
| 4 | 566 |
| 5 | 588 |
| 6 | 646 |
| 7 | 547 |
| 8 | 601 |
| 9 | 616 |
| 10 | 689 |
| Vergleichsbeispiel 1 | 89 |
| Vergleichsbeispiel 2 | 478 |

Wie die vorangegangene Tabelle zeigt, verfügen die erfindungsgemäßen Polymerisate unter den Bedingungen des Hampshire-Testes über ein hohes Calciumbindevermögen bzw. über eine höhere niederschlagsverhindernde Wirkung als Polymere, die gemäß der Lehre der DE 4300772 A1 und der US 3,879,288 erhalten werden.

### Beispiel 23 - Hartwasserkochbeständigkeit:

Eine Calciumchloridlösung (33,6° dH reine Calciumhärte) wird mit einer bestimmten Menge an 10%iger Polymerisatlösung versetzt, 5 Minuten auf einer Heizplatte erhitzt und anschließend bezüglich Trübung beurteilt. Durch Variation der Polymermenge wird diejenige Konzentration ermittelt, bei der erstmals eine klare Lösung erhalten wird. Die Angabe erfolgt hierbei in Gramm pro Liter Hartwasser.

| **Beispiel Nr.** | **Hartwasserbeständigkeit** |
|---|---|
| 1 | 2,0 |
| 10 | 1,5 |
| 11 | 1,5 |
| Vergleichsbeispiel 2 | 2,0 |
| Handelsprodukt auf Basis eines | |
| Maleinsäure/Acrylsäure-Copolymeren | 2,0 |

Die Ergebnisse machen deutlich, daß mit den erfindungsgemäßen Polymerisaten eine wirksame Inhibierung von Kesselstein oder ähnlichen Ablagerungen erreicht bzw. Ausfällungen von Bestandteilen des Hartwassers verhindert werden kann.

### Beispiel 24 - Wirksamkeit als Antibelagmittel

Es wird das Inkrustationspotential von belagsbildenden Lösungen bzw. die Wirksamkeit von Antibelagmitteln auf die Belagbildung nach einem dynamischen Verfahren untersucht. Gemessen werden die durch Belagbildung in einer von der belagbildenden Lösung durchströmten, sich in einem Heizbad befindenden spiralförmigen Kapillare hervorgerufenen Druckänderungen sowie die Veränderung der Härte in der belagbildenden Lösung mittels komplexometrischer Titration. Aus dem Verhältnis der aktuellen Härte zur Ausgangshärte der Prüflösung ergibt sich der Wert für die Inhibierung und aus der Änderung des Druckes in Abhängigkeit von der Dosierung des Antibelagmittels ergibt sich Geschwindigkeit, in der sich die Beläge bilden.

| **Polymerisat- Beispiel** | **Einsatzmenge des Antibelagmittels [ppm]** | | | | | | |
|---|---|---|---|---|---|---|---|
| | **35** | **25** | **20** | **15** | **10** | **7,5** | **5** |
| | **% Inhibierung** | | | | | | |
| 11 | 100 | 100 | 100 | 100 | 100 | 100 | 95 |
| 6 | 100 | 100 | 100 | 100 | 98 | | |
| Vergleichsbsp. 2 | 86 | | | | | | |
| Handelsprodukt aus | 92 | | | | | | |
| Maleinsäure/Acrylsäure | | | | | | | |

Die Meßergebnisse weisen aus, daß die erfindungsgemäßen Polymerisate in diesem, der Praxis stark angenäherten Test, eine höhere Wirksamkeit haben als das Vergleichsbeispiel 2 ( gemäß der DE 43 00 772 A1) bzw. als sie durch das handelsübliche Polymerisat auf Basis Maleinsäure/Acrylsäure gegeben ist.

### Beispiel 25 - Eisen/Mangan-Bindevermögen:

In mehreren Testreihen werden Komplexbildnerlösungen, bestehend aus 2,5ml einer 10%igen Produktlösung in 150ml entmineralisiertem Wasser, mit abgestuften Mengen einer 0,25mol Eisen(III)chloridlösung versetzt und auf 250ml mit entmineralisiertem Wasser aufgefüllt. Mit 10%iger Natronlauge wird der pH-Wert in der ersten Testreihe auf 7, in der zweiten Testreihe auf 11 eingestellt. Die Proben werden dann einen definierten Zeitraum zum einen bei Raumtemperatur und zum anderen bei 95°C belassen und anschließend optisch hinsichtlich der Bildung von Niederschlägen beurteilt. Die Prüfdauer beträgt bei Raumtemperatur 3 Stunden und bei 95°C 1 Stunde nach Erreichen der Prüftemperatur. Es wird diejenige Konzentration ermittelt, bei der erstmals eine klare Lösung erhalten wird. Die Angabe erfolgt in mg Eisen pro Gramm Polymer.

| **Beispiel Nr.** | **pH7/RT** | **pH11/RT** | **pH7/95°C** | **pH11/95°C** |
|---|---|---|---|---|
| 2 | 394 | 1432 | 473 | 1145 |
| 4 | 597 | 1250 | 611 | 1264 |
| 5 | 668 | 1225 | 696 | 1225 |
| Vergl.-Beispiel 2 | 288 | 1511 | 324 | 576 |

Aus der vorangegangenen Tabelle ist ersichtlich, daß die erfindungsgemäßen Polymerisate unter allen Prüfbedingungen - mit Ausnahme pH 11/RT - ein signifikant höheres Eisenbindevermögen aufweisen als die Produkte, die in der Lehre der DE4300772 A1 beschrieben werden. Versuche mit einer Mangan(II)salzlösung gleicher Konzentration ergaben ebenfalls ein hervorragendes Bindevermögen der erfindungsgemäßen Polymerisate gegenüber Produkten nach der DE 43 00 772 A1.

### Beispiel 26 - Hydrophiles Suspendiervermögen

Die zentrale Aufgabe eines Cobuilders in Waschmitteln ist, neben der Verhinderung von Niederschlägen, die Dispergierung hydrophiler Schmutzpartikel in der Waschflotte. Sie bewirkt, daß Schmutz, der durch den Waschvorgang von der Faser abgetrennt wurde, nicht erneut auf das Waschgut aufzieht (Sekundärwaschwirkung). Dieses als Schmutz-tragevermögen des Cobuilders bezeichnete Kennzeichen läßt sich beispielsweise mit Hilfe des Suspendiervermögens gegenüber pulverisiertem Eisenoxid ermitteln. Bevor die Phosphathöchstmengenverordnung für Waschmittel in Kraft gesetzt wurde, fanden Phosphatsalze aufgrund ihrer hervorragenden Suspendiereigenschaften als alleinige Builder Verwendung.

Die Bestimmung des hydrophilen Suspendiervermögens erfolgt durch photometrische Trübungsmessung einer Suspension, die aus der Prüfsubstanz, einem Eisenoxid-Pigment und dem Tensid MARLON A (Alkylbenzolsulfonat der Fa. Hüls AG, Marl) besteht. In einem 25ml Mischzylinder wird feines Fe₂O₃-Pulver (c = 40g/l) in einer wäßrigen Lösung der Testsubstanz (c = 2g/l) unter Zusatz von MARLON A (c = 1g/l) homogen dispergiert . Nach 24 Stunden werden mit einer 1ml Spritze auf der Höhe der 20ml-Marke 1ml Lösung entnommen, diese mit 39ml entmineralisiertem Wasser verdünnt, nochmals geschüttelt und die verbliebene Trübung photometrisch bestimmt. Gemessen wird die Extinktion E₄₅₀ bei 450nm in einer 1-cm-Küvette. Je weniger sich die Dispersion während der Lagerung absetzt, desto größer sind die gemessenen Extinktionswerte und um so höher ist das hydrophile Suspendiervermögen. Als Vergleichssubstanz findet Natriumtripolyphosphat Verwendung.

| **Beispiel** | **Extinktion E450** |
|---|---|
| 2 | 50 |
| 6 | 135 |
| Vergleichsbeispiel 2 Maleinsäure/Acrylsäure-Copolymer | 40 |
| Handelsprodukt | 6 |
| Natriumtripolyphosphat | 160 |

Die Ergebnisse belegen, daß die erfindungsgemäßen Polymere gegenüber den Polymerisaten der DE 4300772 A1 und handelsüblichen Acrylsäure/Maleinsäure-Copolymeren einen deutlichen Wirkungsvorteil hinsichtlich der Dispergierung hydrophiler Partikel besitzen. Es ist überraschenderweise sogar möglich, mit den erfindungsgemäßen Polymerisaten in die Nähe des überragenden Wirkungsbereiches von Natriumtripolyphosphat zu gelangen.

### Beispiel 27 - Verwendung der erfindungsgemäßen Produkte als Bleichstabilisatoren

Im folgenden Test wird die Verwendungsfähigkeit der erfindungsgemäßen Polymerisate als Bleichstabilisatoren in der Rohfaserbleiche, am Beispiel der Bleiche von Viskose, aufgezeigt. Der Bleichprozeß setzt sich hierbei aus den Behandlungsschritten Entschlichtung, saure Extraktion und Bleiche zusammen, deren spezielle Bedingungen nachfolgend beschrieben werden. Als Maß für die Güte des Bleichstabilisators wird zum einen der erreichte Weißgrad (nach Berger) der Ware zum anderen der Restgehalt an Wasserstoffperoxid in der Flotte - gemessen durch Titration mit n/10 KMnO₄-Lösung herangezogen.

### Stabilisatorzusammensetzung:

| | **Wirksubstanz [%]** | **Prod.1** | **Prod.2** | **Prod.3** |
|---|---|---|---|---|
| Milchsäure: | 80 | 12% | 12% | 12% |
| Gluconsäure: | 50 | 27% | 27% | 27% |
| Beispiel 2: | 40 | 61% | - | - |
| Beispiel 4: | 40 | - | 61% | - |
| Beispiel 5: | 40 | - | - | 61% |
| | | 100% | 100% | 100% |

### A. Entschlichtung [Acrylatschlichte]

| | | |
|---|---|---|
| Rezeptur: | Flottenverhältnis: 1:20 | |
| | 2g/l Sulfaton UNS neu | (Handelsprodukt der Chemischen Fabrik Stockhausen, Krefeld) |
| | 1 g/l [50 Gew%] Natronlauge | |

Das gesamte Bleichgut wird 60 Minuten bei 80°C im Entschlichtungsbad behandelt und anschließend mit heißem und kalten Wasser gespült.

### B. Saure Extraktion

Das entschlichtete Material bei der sauren Extraktion bei einem Flottenverhältnis von 1:20 mit jeweils einem der drei o.g. Produktgemische (Produkt 1-3) in einer Konzentration von 0,5g/l und konzentrierter Salzsäure (c=1ml/l) versetzt (Versuch 1-3). Gleichzeitig wird eine Vergleichsprobe sauer extrahiert, die keinerlei Stabilisator enthält (Versuch 4). Alle Proben werden 20 Minuten bei 40 -50°C behandelt und anschließend kalt gespült.

### C.Bleiche

Die Bleiche erfolgt bei folgenden Bedingungen und Prozeßschritten:
Flottenverhältnis 1:20
Aufheizen 3°C / Minute
45 Minuten bei 95°C
Abkühlen
Titration des Restperoxides mit n/10 KMnO₄
Spülen: heiß und kalt

Die Zusammensetzung der einzelnen Bleichbäder kann folgender Tabelle entnommen werden:

| **Bleichbad** | | **1** | **2** | **3** | **4** |
|---|---|---|---|---|---|
| Produkt 1 | g/l | 0,5 | - | - | |
| Produkt 2 | g/l | - | 0,5 | - | |
| Produkt 3 | g/l | - | - | 0,5 | |
| MgCl₂.6H₂O | g/l | 0,4 | 0,4 | 0,4 | 0,4 |
| NaOH [50 Gew%] | g/l | 4 | 4 | 4 | 4 |
| H₂O₂ [35 Gew%] | g/l | 8 | 8 | 8 | 8 |
| Restperoxid | % | 33 | 30 | 40 | 21 |
| Weißgrad (nach Berger) | | 83 | 83 | 83 | 84 |

Die obenstehende Tabelle zeigt, daß mit allen erfindungsgemäßen Produkten ein sehr guter Weißgrad erzielt wird.
Darüber hinaus zeigt ein Vergleich der Restperoxidmengen der Versuche 1-3 mit Versuch 4 deutlich, daß alle erfindungsgemäßen Produkte eine stabilisierende Wirkung auf das Bleichmittel besitzen und damit - wie dem Fachmann bekannt - eine schonende Bleiche ermöglichen. Zudem zeigt der hohe Restperoxidgehalt in den Versuchen 1-3, daß auch bei unterschiedlichen Rohfaserqualitäten stets eine ausreichende Peroxidmenge im Bleichprozeß vorhanden ist.

### Beispiel 28 - Färbung und Dispergierung

Rohbaumwollstränge werden bei einem Flottenverhältnis von 1 : 10 mit 5 ml Essigsäure 30 Minuten abgekocht. 200 ml der Flotte werden anschließend auf 60°C abgekühlt und mit jeweils
0,5 g/l, 1,0 g/l und 2 g/l des Polymerisats nach Beispiel 2
0,05 g/l Indanthrenblau BC Coll
20,0 ml/l NaOH 50 %ig und
5,0 g/l Hydrosulfit konz.
   versetzt.

Nach einer Verweilzeit von 15 Minuten (bei 60°C) wurde die Flotte jeweils durch ein Blauband-Filter abgesaugt und optisch beurteilt.
Die Polymerisate zeigen eine gute Dispergierwirkung und verhindern bei den verwende-ten Einsatzkonzentrationen die Abscheidung von Ausflockungen.

### Beispiel 29 - Wäsche von Färbungen

Schwarzgefärbte PES-Flocke wurde bei einem Flottenverhältnis von 1 : 20 mit einer Flotte von 1 g/l Polymerisat nach Beispiel 2 und 1 g/l SOLOPOL DP (Fettamin-ethoxylat, Handelsbezeichnung der Firma Chemische Fabrik Stockhausen GmbH, Krefeld) 20 Minuten bei 70° - 80°C behandelt und dann heiß und kalt gespült. Oligo-mere, Farb- und Faserstaub werden von den Fasern sehr gut entfernt.

### Beispiel 30 - Herstellung von Leder

Die Eignung der erfindungsgemäßen Polymerisate für die Lederherstellung wird im folgenden am Beispiel der Nachgerbung/Fettung von Oberleder gezeigt. Als Beurteilungskriterien werden die Weichheit des Leders, die Narbenfestigkeit und die Farbe herangezogen. Im Vergleich zu einem handelsüblichen Nachgerbemittel auf Basis Polyacrylsäure/acrylamid bzw. einem Polymer gemäß Vergleichsbeispiel 2 wurden Polymerisate nach den Beispielen 2, 4, 5 mit guten Ergebnissen getestet, die die Eignung der erfindungsgemäßen Polymerisate für die Herstellung von Leder verdeutlicht.

### Ablauf der Nachgerbung/Fettung:

Material: Wet-blue, Falzstärke: 1,8 - 2,0 mm
Die folgenden %-Angaben sind auf das Falzgewicht bezogen.

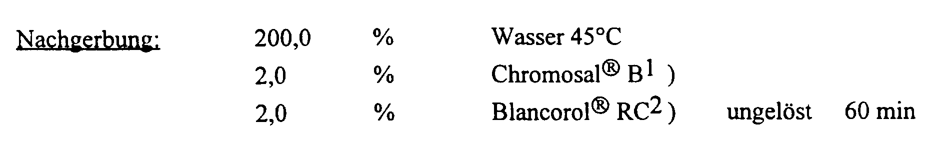

### Flotte ablassen, Leder aufteilen

| | | | | | |
|---|---|---|---|---|---|
| Neutralisation: | 100,0 | % | Wasser 35°C | | |
| | 1,0 | % | Natriumformiat | ungelöst | 30 min |
| | 0,5 | % | Natriumbicarbonat | 1:10 | 60 min |
| | | | pH-Wert: 5,0 | | |

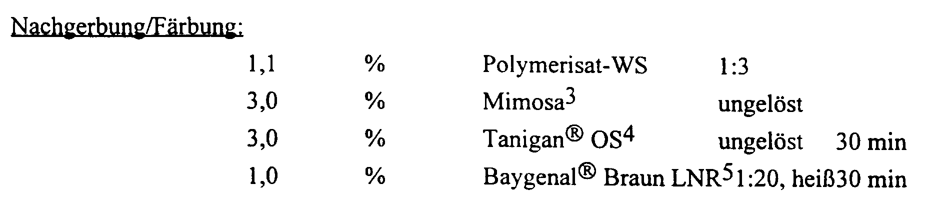

### Flotte ablassen

| | | |
|---|---|---|
| Spülen: | Wasser 60°C | 10 min |

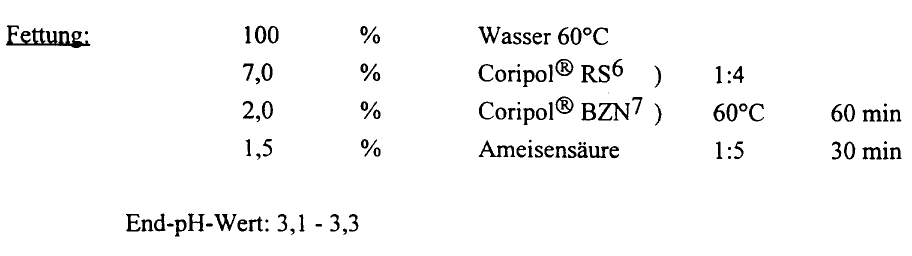

Leder über Nacht auf Bock, ausrecken, vakuumieren bei 75 °C / 2 min, anfeuchten, stollen
1: Bas. Chrom(III)salz, 2: Chrom(III)salz/org. Fixiermittel, 3: natürl. Gerbstoff aus Mimosa Extrakt, 4: neutraler Gerbstoff, Syntan, 5: brauner Farbstoff, 6: Fettungsmittel aus natürlichen und synthetischen Fetten, 7: Gemisch aus natürlichem Fett und Lanolin

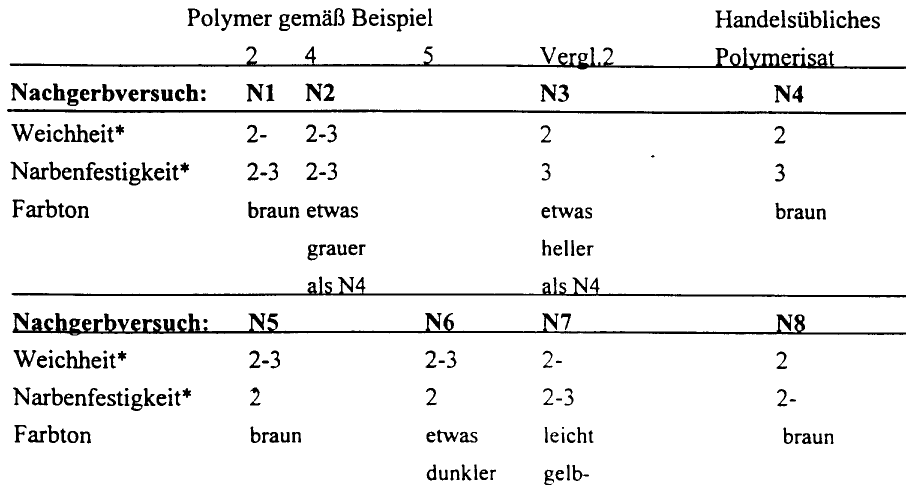

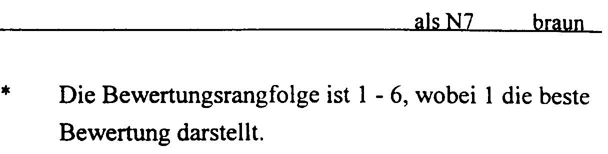

### Beispiel 31 - Dispergierversuche

Um die dispergierende Wirkung der erfindungsgemäßen Copolymere auf Pigmentsuspensionen zu zeigen, wurde Talkum (Finntalc C 10, Fa. OMYA) in wäßrige Copolymerlösungen von pH 12 bis zu einem Pigmentgehalt von 66% eingerühüt und die Viskosität sofort und nach 7 Tagen gemessen und die Aufrührbarkeit mit 1 - 6 benotet. Als Stand der Technik wurde die Kombination aus POLYSALZ S/LUMITEN P-T (Fa. BASF AG) herangezogen. Der Zusatz des Dispergiermittels betrug 0,2%/atro Pigment bzw. im Falle von POLYSALZ/LUMITEN entsprechend der praxisüblichen Konzentrationen von 0,15/1,0 %/atro Pigment. Erfindungsgemäße Polymerisate nach Beispiel 6 und 11 wurden geprüft und zeigten innerhalb der Meßzeit stabile bis leicht sinkende Viskositäten bei guten bis befriedigenden Aufrührbarkeiten und sind somit für diese Anwendung voll geeignet.

## Patentansprüche

1. Wasserlösliche, für Wasch- und Reinigungsmittel geeignete Polymere aus polymerisierten monoethylenisch ungesättigten Dicarbonsäuren und/oder deren Salzen, polymerisierten monoethylenisch ungesättigten Monocarbonsäuren und/oder deren Salzen, polymerisierten monoethylenisch ungesättigten Monomeren, die nach Hydrolyse oder Verseifung zu Monomereinheiten mit einer oder mehreren an der C-C-Kette kovalent gebundenen Hydroxylgruppen umgewandelt werden können und polymerisierten monoethylenisch ungesättigten sulfonsäure- bzw. sulfatgruppenhaltigen Monomeren und gegebenenfalls weiteren polymerisierten radikalisch copolymerisierbaren Monomeren, dadurch gekennzeichnet, daß sie aus
a) 10 - 70 Gew.% monoethylenisch ungesättigten C₄₋₈-Dicarbonsäuren und/oder deren Salzen
b) 20 - 85 Gew.% monoethylenisch ungesättigten C₃₋₁₀-Monocarbonsäuren und/oder deren Salzen
c) 1 - 50 Gew.% einfach ungesättigten Monomeren, die nach Hydrolyse oder Verseifung zu Monomereinheiten mit einer oder mehreren an der C-C-Kette kovalent gebundenen Hydroxylgruppen umgewandelt werden können und
d) 0,1 - 40 Gew.% monoethylenisch ungesättigten sulfonsäure- oder sulfatgruppenhaltigen Monomeren bzw. deren Salzen
e) 0 - 10 Gew.% weiteren, radikalisch copolymerisierbaren Monomeren, wobei die Summe der Monomeren von a) bis e) 100 Gew.% beträgt durch radikalische Polymerisation und saure Hydrolyse oder alkalische Verseifung in wässrigem Medium erhältlich sind.

2. Wasserlösliche, für Wasch- und Reinigungsmittel geeignete Polymere nach Anspruch 1, dadurch gekennzeichnet, daß sie aus
a) 20 - 60 Gew% monoethylenisch ungesättigten C₄₋₈-Dicarbonsäuren bzw. deren Salzen
b) 25 - 65 Gew% monoethylenisch ungesättigten C₃₋₁₀-Monocarbonsäuren bzw. deren Salzen
c) 1 - 30 Gew% einfach ungesättigten Monomeren, die nach Hydrolyse oder Verseifung zu Monomereinheiten mit einer oder mehreren an der C-C-Kette kovalent gebundenen Hydroxylgruppen umgewandelt werden können und
d) 0,5 - 25 Gew. %monoethylenisch ungesättigten sulfonsäure- oder sulfatgruppenhaltigen Monomeren
e) 0 - 10 Gew% weiteren, radikalisch copolymerisierbaren Monomeren aufgebaut sind,
wobei die Summe der Monomeren von a) bis e) 100 Gew.% beträgt.

3. Wasserlösliche, für Wasch- und Reinigungsmittel geeignete Polymere nach den Ansprüchen 1 bis 2, dadurch gekennzeichnet, daß sie aus
a) 25 - 55 Gew.% monoethylenisch ungesättigten C₄₋₈-Dicarbonsäuren bzw. deren Salzen
b) 30 - 60 Gew. % monoethylenisch ungesättigten C₃₋₁₀-Monocarbonsäuren bzw. deren Salzen
c) 1 - 20 Gew. % einfach ungesättigten Monomeren, die nach Hydrolyse oder Verseifung zu Monomereinheiten mit einer oder mehreren an der C-C-Kette kovalent gebundenen Hydroxylgruppen umgewandelt werden können und
d) 1 - 10 Gew. % monoethylenisch ungesättigten sulfonsäure- oder sulfatgruppenhaltigen Monomeren und
e) 0 - 10 Gew. % weiteren, radikalisch copolymerisierbaren Monomeren aufgebaut sind,
wobei die Summe der Monomeren von a) bis e) 100 Gew. % beträgt.

4. Wasserlösliche, für Wasch- und Reinigungsmittel geeignete Polymere nach den Ansprüchen 1 bis 3, dadurch gekennzeichnet, daß sie aus
a) 25 - 55 Gew. % monoethylenisch ungesättigten C₄₋₈-Dicarbonsäuren bzw. deren Salzen
b) 30 - 60 Gew. % monoethylenisch ungesättigten C₃₋₁₀-Monocarbonsäuren bzw. deren Salzen
c) 1 - 15 Gew. % einfach ungesättigten Monomeren, die nach Hydrolyse oder Verseifung zu Monomereinheiten mit einer oder mehreren an der C-C-Kette kovalent gebundenen Hydroxylgruppen umgewandelt werden können und
d) 1 - 5 Gew. % monoethylenisch ungesättigten sulfonsäure- oder sulfatgruppenhaltigen Monomeren und
e) 0 - 10 Gew. % weiteren, radikalisch copolymerisierbaren Monomeren aufgebaut sind,
wobei die Summe der Monomeren von a) bis e) 100 Gew. % beträgt.

5. Wasserlösliche, für Wasch- und Reinigungsmittel geeignete Polymere nach den Ansprüchen 1 - 4, dadurch gekennzeichnet, daß sie als Monomerenkomponente a) Maleinsäure, Itaconsäure und Fumarsäure bzw. deren Salze, als Monomerenkomponente b) Acryl- oder Methacrylsäure bzw. deren Salze, als Monomerenkomponente c) Vinylacetat, Vinylpropionat, Ethylenglycolmonovinylether, Vinylencarbonat und/oder Methylvinylether und als Monomerkomponente d) (Meth)allylsulfonsäure, (Meth)allylalkoholsulfat, Hydroxyethyl(meth)acrylatsulfat, Vinylsulfonsäure, Acrylamidomethylpropansulfonsäure bzw. deren Salze enthalten.

6. Wasserlösliche, für Wasch und Reinigungsmittel geeignete Polymere nach den Ansprüchen 1 bis 5, dadurch gekennzeichnet, daß sie als Monomerkomponente a) Maleinsäure bzw. deren Salz, als Monomerkomponente b) Acrylsäure bzw. deren Salz, als Monomerkomponente c) Vinylacetat und als Monomerkomponente d) (Meth)allylsulfonsäure bzw. deren Salz enthält.

7. Verfahren zur Herstellung von wasserlöslichen; für Wasch- und Reinigungsmittel geeigneten Polymeren nach Anspruch 1 aus monoethylenisch ungesättigten Dicarbonsäuren und/oder deren Salzen und/oder Dicarbonsäureanhydriden, monoethylenisch ungesättigten Monocarbonsäuren und/oder deren Salzen, monoethylenisch ungesättigten sulfonsäure- oder sulfatgruppenhaltigen Monomeren bzw. deren Salzen und monoethylenisch ungesättigten Monomeren, die nach saurer Hydrolyse oder alkalischer Verseifung zu Monomereinheiten mit einer oder mehreren an der C-C-Kette kovalent gebundenen Hydroxylgruppen umgewandelt werden können und gegebenenfalls weiteren radikalisch copolymerisierbaren Monomeren, dadurch gekennzeichnet, daß sie durch radikalische Polymerisation und Hydrolyse oder Verseifung in wässrigem Medium gebildet werden.

8. Verfahren zur Herstellung von wasserlöslichen, für Wasch- und Reinigungsmittel geeigneten Polymeren nach Anspruch 7, dadurch gekennzeichnet, daß die Polymerisation in wäßriger Lösung bei 40 - 180 °C, vorzugsweise bei 60 - 120 °C durchgeführt wird.

9. Verfahren zur Herstellung von wasserlöslichen für Wasch- und Reinigungsmittel geeigneten Polymeren nach den Ansprüchen 7 und 8, dadurch gekennzeichnet, daß die Dicarbonsäuren, Dicarbonsäureanhydride und mindestens eine Teilmenge des sulfonsäure- oder sulfatgruppenhaltigen Monomeren gemeinsam im Reaktionsgefäß vorgelegt und die verbleibenden Monomeren während der Polymerisation zugefügt werden und die Polymerisation ggf. im geschlossenen Polymerisationsreaktor durchgeführt wird.

10. Verfahren zur Herstellung von wasserlöslichen für Wasch- und Reinigungsmittel geeigneten Polymeren nach den Ansprüchen 7 bis 9, dadurch gekennzeichnet, daß das Dicarbonsäureanhydrid vor der Polymerisation hydrolysiert und mindestens teilweise neutralisiert wird.

11. Verfahren zur Herstellung von wasserlöslichen, für Wasch- und Reinigungsmittel geeigneten Polymeren nach den Ansprüchen 7 bis 10, dadurch gekennzeichnet, daß als Monomerenkomponente a) Maleinsäure, Maleinsäureanhydrid, Itaconsäure, Itaconsäureanhydrid und Fumarsäure bzw. deren Salze, als Monomererkomponente b) Acryl- oder Methacrylsäure bzw. deren Salze, als Monomerenkomponente c) Vinylacetat, Vinylpropionat, Ethylenglycolmonovinylether und/oder Methylvinylether und als Monomerkomponente d) (Meth)allylsulfonsäure, (Meth)allylalkoholsulfat, Vinylsulfonsäure, Hydroxyethyl(meth)acrylatsulfat, Acrylamidomethylpropansulfonsäure bzw. deren Salze verwendet werden.

12. Verfahren zur Herstellung von wasserlöslichen, für Wasch- und Reinigungsmittel geeigneten Polymeren nach den Ansprüchen 7 bis 11, dadurch gekennzeichnet, daß die Verseifung mit Alkalihydroxiden in Gegenwart von Wasserstoffperoxid oder mit Schwefeldioxid nach der Polymerisation durchgeführt wird.

13. Verfahren nach Anspruch 7 - 12, dadurch gekennzeichnet, daß man die Polymerisation in Gegenwart von grenzflächenaktiven Verbindungen durchführt.

14. Verfahren nach Anspruch 13, dadurch gekennzeichnet, daß die Polymerisation in Gegenwart von anionischen und/oder nichtionischen Tensiden durchgeführt wird.

15. Verfahren nach Anspruch 13, dadurch gekennzeichnet, daß in Gegenwart von 0,1 - 5 Gew. %, vorzugsweise von 0,5 - 2 Gew. %, grenzflächenaktiven Verbindungen polymerisiert wird.

16. Verwendung der Polymerisate nach den Ansprüchen 1 - 6 als Zusatz bzw. Cobuilder in Waschmitteln.

17. Verwendung der Polymerisate nach den Ansprüchen 1 - 6 in Gerüststoffkombinationen.

18. Verwendung der Polymerisate nach den Ansprüchen 1 - 6 als Zusatz bzw. Cobuilder in Waschmitteln, die frei von Zeolith sind.

19. Verwendung der Polymerisate nach den Ansprüchen 1- 6 als Zusatz bzw. Cobuilder in phosphatfreien oder phosphatarmen Waschmitteln.

20. Verwendung der Polymerisate nach den Ansprüchen 1 - 6 als Bindemittel für mehrwertige Metallionen.

21. Verwendung der Polymerisate nach den Ansprüchen 1 - 6 als Zusatz zu Reinigungsmitteln.

22. Verwendung der Polymerisate nach den Ansprüchen 1 - 6 als Hilfsmittel bei der Textilveredlung

23. Verwendung der Polymerisate nach den Ansprüchen 1 - 6 bei der Vorbehandlung von Faserrohstoffen oder Textilmaterialien, insbesondere beim Abkochen, Beuchen und Bleichen.

24. Verwendung der Polymerisate nach den Ansprüchen 1 - 6 als Bleichstabilisatoren.

25. Verwendung der Polymerisate nach den Ansprüchen 1 - 6 als Zusatz bzw. Waschhilfsmittel bei Färbereiprozessen.

26. Verwendung der Polymerisate nach den Ansprüchen 1 - 6 als Hilfmittel beim Textildruck, insbesondere bei der Nachwäsche von Reaktivdrucken und Echtfärbungen von natürlichen und/oder synthetischen Fasern oder Textilmaterialien.

27. Verwendung der Polymerisate nach den Ansprüchen 1 - 6 als Zusatz in Textilfaserschlichten.

28. Verwendung der Polymerisate nach den Ansprüchen 1 - 6 als Hilfsmittel beim Entschlichten von natürlichen oder synthetischen Fasern oder Textilmaterialien

29. Verwendung der Polymerisate nach den Ansprüchen 1 - 6 als Hilfsmittel nach den Ansprüchen 24 - 28, dadurch gekennzeichnet, daß sie in Kombination mit Tensiden, insbesondere mit anionischen Tensiden eingesetzt werden.

30. Verwendung der Polymerisate nach den Ansprüchen 1 - 6 als Hilfsmittel nach den Ansprüchen 24 - 28, dadurch gekennzeichnet, daß sie in Kombination mit komplexbildenden Carbonsäuren eingesetzt werden.

31. Verwendung der Polymerisate nach den Ansprüchen 1 - 6 als Hilfsmittel nach den Ansprüchen 24, 25, 30, 31, dadurch gekennzeichnet, daß sie zum chloritfreien Bleichen vorzugsweise in mehrstufigen Verfahren in einem veränderbaren Behandlungsbad oder Continue-Prozessen eingesetzt werden.

32. Verwendung der Polymerisate nach den Ansprüchen 1 - 6 als Hilfsmittel bei der Lederherstellung.

33. Verwendung der Polymerisate nach den Ansprüchen 1 - 6 als Hilfsmittel bei der Lederherstellung beim Weichen, Äschern, insbesondere in Waschprozessen nach dem Äschern und insbesondere bei der Entkälkung und bei der CO₂-Entkälkung.

34. Verwendung der Polymerisate nach den Ansprüchen 1 - 6 als Zusatz beim Vorgerben, Gerben und bei der Nachgerbung.

35. Verwendung der Polymerisate nach den Ansprüchen 1 - 6 zur Inhibierung der Wasserhärte und als Belagsverhinderer.

36. Verwendung der Polymerisate nach den Ansprüchen 1 - 6 als Dispergiermittel.

37. Wasch- oder Reinigungsmittel, insbesondere Textilwaschmittel, enthaltend Polymerisate nach den Ansprüchen 1 - 6.

38. Wasch- oder Reinigungsmittel, insbesonder Textilwaschmittel, gemaß Anspruch 37, dadurch gekennzeichnet, daß sie 0,5 - 30 Gew. %, vorzugsweise 2 - 25 Gew. % Polymerisate gemäß Anspruch 1 - 13,0 - 20 Gew. %, vorzugsweise 5 - 15 Gew. % anorganische Carbonate und 0 - 20 Gew. %, vorzugsweise 5 - 15 Gew. % Salze organischer Polycarbonsäuren enthalten.

39. Mittel nach Anspruch 37 und 38, dadurch gekennzeichnet, daß es als Buildersubstanzen 10 - 65 Gew. % Zeolith und/oder kristalline Schichtsilikate und 2 - 20 Gew. % Polymerisate gemäß Anspruch 1 - 6 enthält.

40. Mittel nach den Ansprüchen 37 bis 39, dadurch gekennzeichnet, daß es 2 - 7 Gew.% amorphe Silikate enthält.

41. Mittel nach den Ansprüchen 37 - 40, dadurch gekennzeichnet, daß es 10 - 40 Gew. % Tenside, 0 - 5 Gew. % Verfärbungsinhibitoren sowie 15 - 45 Gew. % weitere übliche Inhaltsstoffe von Waschmitteln enthält und ein Schüttgewicht von 300 bis 1200 g/l, insbesondere von oberhalb 600g/l aufweist.

42. Mittel nach den Ansprüchen 37 - 41, dadurch gekennzeichnet, daß es frei von Phosphat und/oder Zeolith und/oder Schichtsilikat ist.

43. Gerüststoffkombination, enthaltend Polymerisate nach den Ansprüchen 1 - 6.

44. Gerüststoffkombination nach Anspruch 43, dadurch gekennzeichnet, daß sie 50 - 70 Gew. %, vorzugsweise 55 - 65 Gew. % Zeolith und oder kristalline Schichtsilikate, insbesondere Zeolith und kristalline Schichtsilikate im Gewichtsverhältnis 1:1 oder darüber, und 1 bis 30 Gew. % Polymerisat nach Anspruch 1 - 6 enthält.

45. Gerüststoffkombination nach einem der Ansprüche 43 und 44, dadurch gekennzeichnet, daß sie 5 bis 30 Gew. %, vorzugsweise 5 bis 25 Gew. % Natriumcarbonat, 0 bis 10 Gew. %, vorzugsweise 2 bis 8 Gew. % amorphe Silikate, 0 - 8 Gew. %, vorzugsweise 0,5 - 5 Gew. % und insbesondere bis 2 Gew. % übliche (co)polymere Acrylate und 0 bis 25 Gew. %, vorzugsweise 2 bis 20 Gew. % und insbesondere 5 - 20 Gew. % Salze organischer Polycarbonsäuren enthalten.

46. Gerüststoffkombination nach einem der Ansprüche 43 bis 45, dadurch gekennzeichnet, daß sie flüssige bis wachsartige Komponenten, vorzugsweise nichtionische Tenside, enthält.

47. Verfahren zur Herstellung einer Gerüststoffkombination gemäß Anspruch 43 bis 46 oder eines Wasch- oder Reinigungsmittels gemäß den Ansprüchen 37 - 42, dadurch gekennzeichnet, daß das Granulat durch Sprühtrocknung oder durch ein Misch-, Granulier- und/oder Extrudierverfahren hergestellt wird.

48. Reinigungsmittel für harte Oberflächen, dadurch gekennzeichnet, daß sie 1 - 60 Gew.% der Polymerisate gemäß Anspruch 1 - 6 enthalten, 5-90 Gew. %, vorzugsweise 5 - 70 Gew. % Alkalibildner, 0 - 60 Gew. %, vorzugsweise 5 - 50 Gew. % Dispergier- und Komplexiermittel, 0 - 10 Gew. %, vorzugsweise 0,5 - 5 Gew. % schwachschäumende Tenside und 0 - 50 Gew. % weitere übliche Zusatzstoffe enthalten.

49. Mittel nach Anspruch 48, dadurch gekennzeichnet, daß die Alkalibildner aus der Gruppe der Alkalihydroxide, Alkalicarbonate und Alkalihydrogencarbonate ausgewählt werden.

50. Mittel nach Anspruch 48 und 49, dadurch gekennzeichnet, daß die Dispergier- und Komplexiermittel aus der Gruppe der Citrate, Phosphonate, Homo-. und Copolymerisate der Acrylsäure, Isoserindiessigsäure, Polyasparaginsäuren, Ethylendiamintetraessigsäure und Nitrilotriessigsäure ausgewählt werden.

51. Mittel nach Anspruch 48 - 50, dadurch gekennzeichnet, daß die schwachschäumenden Tenside aus der Gruppe der nichtionischen Tenside ausgewählt werden.

52. Mittel nach Anspruch 48 - 51, dadurch gekennzeichnet, daß sie 0,5 - 20 Gew. % Bleichmittel auf Sauerstoffbasis und 0 - 10 Gew. % Bleichaktivatoren enthalten.

53. Mittel nach Anspruch 48 - 52, dadurch gekennzeichnet, daß sie 0,1 - 5 Gew. % Enzyme enthalten.

54. Mittel nach Anspruch 48 - 53 in flüssiger, pulvriger, granulierter oder tablettierter Form.

55. Verfahren zur Herstellung eines Mittels gemäß Anspruch 54, dadurch gekennzeichnet, daß es durch Sprühtrocknung und/oder durch ein Misch-, Granulier- und/oder Extrudierverfahren hergestellt wird.

## Claims

1. Water-soluble polymers suitable for washing and cleaning agents, made of polymerized monoethylenically unsaturated dicarboxylic acids and/or the salts thereof, polymerized monoethylenically unsaturated monocarboxylic acids and/or the salts thereof, polymerized monoethylenically unsaturated monomers which, upon hydrolysis or saponification, may be converted to monomer units having one or more hydroxyl groups covalently bound to the C-C chain, and polymerized monoethylenically unsaturated monomers containing sulfonic acid or sulfate groups, and optionally other polymerized monomers copolymerizable via free-radicals, characterized in that they may be obtained from
a) 10 - 70 wt.-% of monoethylenically unsaturated C₄₋₈ dicarboxylic acids and/or the salts thereof,
b) 20 - 85 wt.-% of monoethylenically unsaturated C₃₋₁₀ monocarboxylic acids and/or the salts thereof,
c) 1 - 50 wt.-% of mono-unsaturated monomers which, upon hydrolysis or saponification, may be converted to monomer units having one or more hydroxyl groups covalently bound to the C-C chain,
d) 0.1 - 40 wt.-% of monoethylenically unsaturated monomers containing sulfonic acid or sulfate groups, or the salts thereof, and
e) 0 - 10 wt.-% of other monomers copolymerizable via free-radicals,
the sum of monomers from a) through e) amounting to 100 wt.-%,
by free-radical polymerization and acid hydrolysis or alkaline saponification in an aqueous medium.

2. The water-soluble polymers of claim 1, which are suitable for washing and cleaning agents, characterized in that they are constituted of
a) 20 - 60 wt.-% of monoethylenically unsaturated C₄₋₈ dicarboxylic acids and/or the salts thereof,
b) 25 - 65 wt.-% of monoethylenically unsaturated C₃₋₁₀ monocarboxylic acids and/or the salts thereof,
c) 1 - 30 wt.-% of mono-unsaturated monomers which, upon hydrolysis or saponification, may be converted to monomer units having one or more hydroxyl groups covalently bound to the C-C chain,
d) 0.5 - 25 wt.-% of monoethylenically unsaturated monomers containing sulfonic acid or sulfate groups, and
e) 0 - 10 wt.-% of other monomers copolymerizable via free-radicals,
the sum of monomers from a) through e) amounting to 100 wt.-%.

3. The water-soluble polymers of claims 1-2, which are suitable for washing and cleaning agents, characterized in that they are constituted of
a) 25 - 55 wt.-% of monoethylenically unsaturated C₄₋₈ dicarboxylic acids and/or the salts thereof,
b) 30 - 60 wt.-% of monoethylenically unsaturated C₃₋₁₀ monocarboxylic acids and/or the salts thereof,
c) 1 - 20 wt.-% of mono-unsaturated monomers which, upon hydrolysis or saponification, may be converted to monomer units having one or more hydroxyl groups covalently bound to the C-C chain,
d) 1 - 10 wt.-% of monoethylenically unsaturated monomers containing sulfonic acid or sulfate groups, and
e) 0 - 10 wt.-% of other monomers copolymerizable via free-radicals,
the sum of monomers from a) through e) amounting to 100 wt.-%.

4. The water-soluble polymers of claims 1-3, which are suitable for washing and cleaning agents, characterized in that they are constituted of
a) 25 - 55 wt.-% of monoethylenically unsaturated C₄₋₈ dicarboxylic acids and/or the salts thereof,
b) 30 - 60 wt.-% of monoethylenically unsaturated C₃₋₁₀ monocarboxylic acids and/or the salts thereof,
c) 1 - 15 wt.-% of mono-unsaturated monomers which, upon hydrolysis or saponification, may be converted to monomer units having one or more hydroxyl groups covalently bound to the C-C chain,
d) 1 - 5 wt.-% of monoethylenically unsaturated monomers containing sulfonic acid or sulfate groups, and
e) 0 - 10 wt.-% of other monomers copolymerizable via free-radicals,
the sum of monomers from a) through e) amounting to 100 wt.-%.

5. The water-soluble polymers of claims 1-4, which are suitable for washing and cleaning agents, characterized in that they contain maleic acid, itaconic acid and fumaric acid and/or the salts thereof as monomer component a), acrylic or methacrylic acid and/or the salts thereof as monomer component b), vinyl acetate, vinyl propionate, ethylene glycol monovinyl ether, vinylene carbonate and/or methyl vinyl ether as monomer component c), and (meth)allylsulfonic acid, (meth)allyl alcohol sulfate, hydroxyethyl (meth)acrylate sulfate, vinylsulfonic acid, acrylamidomethylpropanesulfonic acid and/or the salts thereof as monomer component d).

6. The water-soluble polymers of claims 1-5, which are suitable for washing and cleaning agents, characterized in that they contain maleic acid and/or the salt thereof as monomer component a), acrylic acid and/or the salt thereof as monomer component b), vinyl acetate as monomer component c), and (meth)allylsulfonic acid and/or the salt thereof as monomer component d).

7. A process for producing the water-soluble polymers of claim 1, which are suitable for washing and cleaning agents, from monoethylenically unsaturated dicarboxylic acids and/or the salts thereof and/or dicarboxylic acid anhydrides, monoethylenically unsaturated monccarboxylic acids and/or the salts thereof, monoethylenically unsaturated monomers containing sulfonic acid or sulfate groups and/or the salts thereof, and monoethylenically unsaturated monomers which, upon acid hydrolysis or alkaline saponification, may be converted to monomer units having one or more hydroxyl groups covalently bound to the C-C chain, and optionally other monomers copolymerizable via free-radicals, characterized in that the polymers are formed by free-radical polymerization and hydrolysis or saponification in an aqueous medium.

8. The process of claim 7 for the production of water-soluble polymers suitable for washing and cleaning agents, characterized in that the polymerization is carried out in an aqueous solution at 40-180°C, preferably at 60-120°C.

9. The process of claims 7 and 8 for the production of water-soluble polymers suitable for washing and cleaning agents, characterized in that the dicarboxylic acids, dicarboxylic acid anhydrides and at least part of the amount of monomers containing sulfonic acid or sulfate groups are charged together in a reaction vessel, and the remaining monomers are added during the polymerization, and the polymerization is optionally performed in a closed polymerization reactor.

10. The process of claims 7 through 9 for the production of water-soluble polymers suitable for washing and cleaning agents, characterized in that the dicarboxylic acid anhydride is hydrolyzed and at least partially neutralized prior to polymerization.

11. The process of claims 7 through 10 for the production of water-soluble polymers suitable for washing and cleaning agents, characterized in that maleic acid, maleic acid anhydride, itaconic acid, itaconic acid anhydride, and fumaric acid and/or the salts thereof are used as monomer component a), acrylic or methacrylic acid and/or the salts thereof are used as monomer component b), vinyl acetate, vinyl propionate, ethylene glycol monovinyl ether, and/or methyl vinyl ether are used as monomer component c), and (meth)allylsulfonic acid, (meth)allyl alcohol sulfate, vinylsulfonic acid, hydroxyethyl (meth)acrylate sulfate, acrylamidomethylpropanesulfonic acid and/or the salts thereof are used as monomer component d).

12. The process of claims 7 through 11 for the production of water-soluble polymers suitable for washing and cleaning agents, characterized in that the saponification is carried out subsequent to the polymerization, using alkali hydroxides in the presence of hydrogen peroxide or using sulfur dioxide.

13. The process according to claims 7 through 12, characterized in that the polymerization is carried out in the presence of surface-active compounds.

14. The process according to claim 13, characterized in that the polymerization is carried out in the presence of anionic and/or non-ionic surfactants.

15. The process according to claim 13, characterized in that the polymerization is effected in the presence of 0.1 - 5 wt.-%, preferably 0.5 - 2 wt.-% of surface-active compounds.

16. Use of the polymers according to claims 1 through 6 as additives or cobuilders in washing agents.

17. Use of the polymers according to claims 1 through 6 in builder combinations.

18. Use of the polymers according to claims 1 through 6 as additives or cobuilders in washing agents free of zeolite.

19. Use of the polymers according to claims 1 through 6 as additives or cobuilders in washing agents free of phosphate or low in phosphate.

20. Use of the polymers according to claims 1 through 6 as binding agents for multivalent metal ions.

21. Use of the polymers according to claims 1 through 6 as additive in cleaning agents.

22. Use of the polymers according to claims 1 through 6 as auxiliary agents in textile finishing.

23. Use of the polymers according to claims 1 through 6 in the pretreatment of fiber raw materials or textile materials, particularly in boiling, bucking and bleaching.

24. Use of the polymers according to claims 1 through 6 as bleaching stabilizers.

25. Use of the polymers according to claims 1 through 6 as additives or washing aids in dyeing processes.

26. Use of the polymers according to claims 1 through 6 as auxiliary agents in textile printing, particularly in rewashing of reactive printings and fast dyeings of natural and/or synthetic fibers or textile materials.

27. Use of the polymers according to claims 1 through 6 as additives in textile fiber sizes.

28. Use of the polymers according to claims 1 through 6 as auxiliary agents in the desizing of natural or synthetic fibers or textile materials.

29. Use of the polymers according to claims 1 through 6 as auxiliary agents according to claims 24 through 28, characterized in that they are used in combination with surfactants, particularly anionic surfactants.

30. Use of the polymers according to claims 1 through 6 as auxiliary agents according to claims 24 through 28, characterized in that they are used in combination with complexing carboxylic acids.

31. Use of the polymers according to claims 1 through 6 as auxiliary agents according to claims 24, 25, 30, 31, characterized in that they are used in chlorite-free bleaching, preferably in multi-step processes in a modifiable treatment bath or in continuous processes.

32. Use of the polymers according to claims 1 through 6 as auxiliary agents in leather manufacturing.

33. Use of the polymers according to claims 1 through 6 as auxiliary agents in leather manufacturing in soaking, liming, particularly in washing processes following liming and, in particular, in deliming and in CO₂ deliming.

34. Use of the polymers according to claims 1 through 6 as additives in pretanning, tanning, and in retanning.

35. Use of the polymers according to claims 1 through 6 for inhibiting water hardness and as deposit preventer.

36. Use of the polymers according to claims 1 through 6 as dispersants.

37. Washing or cleaning agents, particularly textile washing agents, containing polymers according to claims 1 through 6.

38. The washing or cleaning agents, particularly textile washing agents, according to claim 37, characterized in that they contain 0.5 - 30 wt.-%, preferably 2 - 25 wt.-% of polymers according to claims 1 through 13, 0 - 20 wt.-%, preferably 5 - 15 wt.-% of inorganic carbonates, and 0 - 20 wt.-%, preferably 5 - 15 wt.-% of salts of organic polycarboxylic acids.

39. The agents according to claims 37 and 38, characterized in that they contain 10 - 65 wt.-% of zeolite and/or crystalline layer silicates and 2 - 20 wt.-% of polymers according to claims 1 through 6 as builder substances.

40. The agents according to claims 37 through 39, characterized in that they contain 2 - 7 wt.-% of amorphous silicates.

41. The agents according to claims 37 through 40, characterized in that they contain 10 - 40 wt.-% of surfactants, 0 - 5 wt.-% of discoloring inhibitors, and 15 - 45 wt.-% of other common ingredients of washing agents, and have a bulk weight of from 300 to 1200 g/l, particularly above 600 g/l.

42. The agents according to claims 37 through 41, characterized in that they are free of phosphate and/or zeolite and/or layer silicate.

43. A builder combination, containing polymers according to claims 1 through 6.

44. The builder combination according to claim 43, characterized in that it contains 50 - 70 wt.-%, preferably 55 - 65 wt.-% of zeolite and/or crystalline layer silicates, particularly zeolite and crystalline layer silicates at a weight ratio of 1:1 or above, and from 1 to 30 wt.-% of polymer according to claims 1 through 6.

45. The builder combination according to one of claims 43 and 44, characterized in that it contains from 5 to 30 wt.-%, preferably from 5 to 25 wt.-% of sodium carbonate, from 0 to 10 wt.-%, preferably from 2 to 8 wt.-% of amorphous silicates, 0 - 8 wt.-%, preferably 0.5 - 5 wt.-%, and particularly 2 wt.-% of common (co)polymer acrylates, and from 0 to 25 wt.-%, preferably from 2 to 20 wt.-%, and particularly 5 - 20 wt.-% of salts of organic polycarboxylic acids.

46. The builder combination according to one of claims 43 through 45, characterized in that it contains components ranging from fluid to wax-like, preferably non-ionic surfactants.

47. A process for producing a builder combination according to claims 43 through 46 or a washing or cleaning agent according to claims 37 through 42, characterized in that the granulate is produced by spray drying or by using a mixing, granulation and/or extrusion process.

48. Cleaning agents for rigid surfaces, characterized in that they contain 1 - 60 wt.-% of the polymers according to claims 1 through 6, 5 - 90 wt.-%, preferably 5 - 70 wt.-% of alkaligenous agents, 0 - 60 wt.-%, preferably 5 - 50 wt.-% of dispersing and complexing agents, 0 - 10 wt.-%, preferably 0.5 - 5 wt.-% of low-foaming surfactants, and 0 - 50 wt.-% of other common additives.

49. The agents according to claim 48, characterized in that the alkaligenous agents are selected from the group of alkali hydroxides, alkali carbonates, and alkali hydrogen carbonates.

50. The agents according to claims 48 and 49, characterized in that the dispersing and complexing agents are selected from the group of citrates, phosphonates, homo-and copolymers of acrylic acid, isoserinediacetic acid, polyaspartic acids, ethylenediaminetetraacetic acid, and nitrilotriacetic acid.

51. The agents according to claims 48 through 50, characterized in that the low-foaming surfactants are selected from the group of non-ionic surfactants.

52. The agents according to claims 48 through 51, characterized in that they contain 0.5 - 20 wt.-% of oxygen-based bleaching agents and 0 - 10 wt.-% of bleaching activators.

53. The agents according to claims 48 through 52, characterized in that they contain 0.1 - 5 wt.-% of enzymes.

54. The agents according to claims 48 through 53 in a liquid, powdered, granulated, or pelletized form.

55. A process for producing an agent according to claim 54, characterized in that it is produced by spray drying and/or by using a mixing, granulation and/or extrusion process.

## Revendications

1. Polymères solubles dans l'eau, convenant pour détergents de lavage et de nettoyage constitués d'acides dicarboxyliques monoéthyléniquement insaturés et/ou de leurs sels, polymérisés, acides monocarboxyliques monoéthyléniquement insaturés et/ou de leurs sels, polymérisés, de monomères monoéthyléniquement insaturés, polymérisés, qui, après hydrolyse ou saponification, peuvent être convertis en unités monomériques comportant un ou plusieurs radicaux hydroxyle liés de manière covalente à la chaîne C-C et de monomères contenant des radicaux acide sulfonique ou sulfate, monoéthyléniquement insaturés, polymérisés et éventuellement d'autres monomères copolymérisables par voie radicalaire, polymérisés, caractérisés en ce qu'on peut les obtenir à partir de
a) 10 à 70% en poids d'acides dicarboxyliques en C₄ à C₈ monoéthyléniquement insaturés et/ou leurs sels,
b) 20 à 85% en poids d'acides monocarboxyliques en C₃ à C₁₀ monoéthyléniquement insaturés et/ou leurs sels,
c) 1 à 50% en poids de monomères monoinsaturés qui, après hydrolyse ou saponifcation, peuvent être convertis en unités monomériques comportant un ou plusieurs radicaux hydroxyle liés de manière covalente à la chaîne C-C et
d) 0,1 à 40% en poids de monomères contenant des radicaux sulfonique ou sulfate monoéthyléniquement insaturés ou leurs sels,
e) 0 à 10% en poids d'autres monomères copolymérisables par voie radicalaire, où la somme des monomères a) à e) totalise 100% en poids, par polymérisation radicalaire et hydrolyse acide ou saponification alcaline en milieu aqueux.

2. Polymères solubles dans l'eau, convenant pour détergents de lavage et de nettoyage suivant la revendication 1,
caractérisés en ce qu'ils sont constitués de
a) 20 à 60% en poids d'acides dicarboxyliques en C₄ à C₈ monoéthyléniquement insaturés ou leurs sels,
b) 25 à 65% en poids d'acides monocarboxyliques en C₃ à C₁₀ monoéthyléniquement insaturés ou leurs sels,
c) 1 à 30% en poids de monomères monoinsaturés qui, après hydrolyse ou saponification, peuvent être convertis en unités monomériques comportant un ou plusieurs radicaux hydroxyle liés de manière covalente à la chaîne C-C et
d) 0,5 à 25% en poids de monomères contenant des radicaux acide sulfonique ou sulfate monoéthyléniquement insaturés,
e) 0 à 10% en poids d'autres monomères copolymérisables par voie radicalaire,
où la somme des monomères a) à e) totalise 100% en poids.

3. Polymères solubles dans l'eau, convenant pour détergents de lavage et de nettoyage suivant les revendications 1 et 2, caractérisés en ce qu'ils sont constitués de
a) 25 à 55% en poids d'acides dicarboxyliques en C₄ à C₈ monoéthyléniquement insaturés ou leurs sels,
b) 30 à 60% en poids d'acides monocarboxyliques en C₃ à C₁₀ monoéthyléniquement insaturés ou leurs sels,
c) 1 à 20% en poids de monomères monoinsaturés qui, après hydrolyse ou saponification, peuvent être convertis en unités monomériques comportant un ou plusieurs radicaux liés de manière covalente à la chaîne C-C et
d) 1 à 10% en poids de monomères contenant des radicaux acide sulfonique ou sulfate monoéthyléniquement insaturés et
e) 0 à 10% en poids d'autres monomères copolymérisables par voie radicalaire,
où la somme des monomères a) à e) totalise 100% en poids.

4. Polymères solubles dans l'eau, convenant pour détergents de lavage et de nettoyage suivant l'une quelconque des revendications 1 à 3, caractérisés en ce qu'ils sont constitués de
a) 25 à 55% en poids d'acides dicarboxyliques en C₄ à C₈ monoéthyléniquement insaturés ou leurs sels,
b) 30 à 60% en poids d'acides monocarboxyliques en C₃ à C₁₀ monoéthyléniquement insaturés ou leurs sels,
c) 1 à 15% en poids de monomères monoinsaturés qui, après hydrolyse ou saponification, peuvent être convertis en unités monomériques comportant un ou plusieurs radicaux liés de manière covalente à la chaîne C-C,
d) 1 à 5% en poids de monomères contenant des radicaux acide sulfonique ou sulfate monoéthyléniquement insaturés et
e) 0 à 10% en poids d'autres monomères copolymérisables par voie radicalaire,
où la somme des monomères a) à e) totalise 100% en poids.

5. Polymères solubles dans l'eau, convenant pour détergents de lavage et de nettoyage suivant l'une quelconque des revendications 1 à 4, caractérisés en ce qu'ils contiennent, à titre de composant monomérique a), de l'acide maléique, de l'acide itaconique et de l'acide fumarique ou leurs sels, à titre de composant monomérique b), de l'acide acrylique ou de l'acide méthacrylique ou leurs sels, à titre de composant monomérique c), de l'acétate de vinyle, du propionate de vinyle, de l'éther monovinylique d'éthylèneglycol, du carbonate de vinylène et/ou de l'éther méthylvinylique et, à titre de composant monomérique d), de l'acide (méth)allylsulfonique, de sulfate d'alcool (méth)allylique, de sulfate de (méth)acrylate d'hydroxyéthyle, de l'acide vinylsulfonique, de l'acide acrylamidométhylpropanesulfonique, ou leurs sels.

6. Polymères solubles dans l'eau, convenant pour détergents de lavage et de nettoyage suivant l'une quelconque des revendications 1 à 5, caractérisés en ce qu'ils contiennent, à titre de composant monomérique a), de l'acide maléique ou son sel, à titre de composant monomérique b), de l'acide acrylique ou son sel, à titre de composant monomérique c), de l'acétate de vinyle et à titre de composant monomérique d), de l'acide (méth)allylsulfonique ou son sel.

7. Procédé de préparation de polymères solubles dans l'eau, convenant pour détergents de lavage et de nettoyage suivant la revendication 1, à partir d'anhydrides d'acides dicarboxyliques et/ou d'acide carboxyliques monoéthyléniquement insaturés et/ou de leurs sels d'acides monocarboxyliques monoéthyléniquement insaturés et/ou de leurs sels, de monomères contenant des radicaux acide sulfonique ou sulfate monoéthyléniquement insaturés ou de leurs sels et de monomères monoéthyléniquement insaturés qui, après hydrolyse acide ou saponification alcaline, peuvent être convertis en unités monomériques comportant un ou plusieurs radicaux hydroxyle liés de manière covalente à la chaîne C-C et éventuellement d'autres monomères copolymérisables par voie radicalaire, présentant la caractéristique qu'ils peuvent être formés par polymérisation radicalaire et hydrolyse ou saponification en milieu aqueux.

8. Procédé de préparation de polymères solubles dans l'eau, convenant pour détergents de lavage et de nettoyage suivant la revendication 7, caractérisé en ce que l'on entreprend la polymérisation en solution aqueuse à 40-180°C , de préférence, 60-120°C.

9. Procédé de préparation de polymères solubles dans l'eau, convenant pour détergents de lavage et de nettoyage suivant les revendications 7 et 8, caractérisé en ce que l'on introduit au préalable les acides dicarboxvliques, les anhydrides d'acides dicarboxyliques et au moins une quantité partielle des monomères contenant des radicaux acide sulfonique ou sulfate en commun dans le récipient de réaction et on ajoute les monomères résiduels au cours de la polymérisation et on entreprend la polymérisation éventuellement dans un réacteur de polymérisation fermé. 10. Procédé de préparation de polymères solubles dans l'eau,

10. convenant pour détergents de lavage et de nettoyage suivant les revendications 7 à 9, caractérisé en ce que l'on hydrolyse l'anhydride d'acide dicarboxylique avant la polymérisation et on le neutralise au moins partiellement.

11. Procédé de préparation de polymères solubles dans l'eau, convenant pour détergents de lavage et de nettoyage suivant les revendications 7 à 10, caractérisé en ce que l'on utilise, à titre de composant monomérique a), de l'acide maléique, de l'acide itaconique et de l'acide fumarique ou leurs sels, à titre de composant monomérique b), de l'acide acrylique ou de l'acide méthacrylique ou leurs sels, à titre de composant monomérique c), de l'acétate de vinyle, du propionate de vinyle, de l'éther monovinylique d'éthylèneglycol et/ou de l'éther méthylvinylique et, à titre de composant monomérique d), de l'acide (méth)allylsulfonique, de sulfate d'alcool (méth)allylique, de l'acide vinylsulfonique, de sulfate de (méth)acrylate d'hydroxyéthyle, de l'acide acrylamidométhylpropanesulfonique, ou leurs sels.

12. Procédé de préparation de polymères solubles dans l'eau, convenant pour détergents de lavage et de nettoyage suivant les revendications 7 à 11, caractérisé en ce que l'on entreprend la saponification avec des hydroxydes de métaux alcalins en présence de peroxyde d'hydrogène ou avec du dioxyde de soufre après la polymérisation.

13. Procédé suivant l'une quelconque des revendications 7 à 12, caractérisé en ce que l'on entreprend la polymérisation en présence de composés tensioactifs.

14. Procédé suivant la revendication 13, caractérisé en ce que l'on entreprend la polymérisation en présence de tensioactifs ou surfactifs anioniques et/ou non ioniques.

15. Procédé suivant la revendication 13, caractérisé en ce que l'on opère la polymérisation en présence de 0,1 à 5% en poids, de préférence, 0,5 à 2% en poids, de composés tensioactifs.

16. Utilisation des polymères suivant l'une quelconque des revendications 1 à 6, à titre de coadjuvant actif dans des détergents de lavage.

17. Utilisation des polymères suivant l'une quelconque des revendications 1 à 6, dans des combinaisons de produits de charge.

18. Utilisation des polymères suivant l'une quelconque des revendications 1 à 6, à titre de coadjuvant actif dans des détergents de lavage, qui sont dépourvus de zéolite.

19. Utilisation des polymères suivant l'une quelconque des revendications 1 à 6, à titre d'additif ou de coadjuvant actif dans des détergents, qui sont dépourvus de phosphates ou pauvres en phosphates.

20. Utilisation des polymères suivant l'une quelconque des revendications 1 à 6, à titre de liants pour des ions de métaux polyvalents.

21. Utilisation des polymères suivant l'une quelconque des revendications 1 à 6, à titre d'additif pour des détergents de nettoyage.

22. Utilisation des polymères suivant l'une quelconque des revendications 1 à 6, à titre d'adjuvant lors du finissage de matières textiles.

23. Utilisation des polymères suivant l'une quelconque des revendications 1 à 6, au cours du traitement préalable de matières premières en fibres ou de matières textiles, plus spécialement, lors du dégommage, du trempage et du blanchiment.

24. Utilisation des polymères suivant l'une quelconque des revendications 1 à 6, à titre de stabilisateurs de blanchiment.

25. Utilisation des polymères suivant l'une quelconque des revendications 1 à 6, à titre d'additif ou d'adjuvant de détergence au cours de processus de teinture.

26. Utilisation des polymères suivant l'une quelconque des revendications 1 à 6, à titre d'adjuvant lors de l'impression des textiles, en particulier, au cours du postlavage d'impressions réactives et de la fixation des couleurs de matières textes ou de fibres naturelles et/ou synthétiques.

27. Utilisation des polymères suivant l'une quelconque des revendications 1 à 6, à titre d'additif au cours de l'ensimage de fibres textiles.

28. Utilisation des polymères suivant l'une quelconque des revendications 1 à 6, à titre d'adjuvant lors du désencollage de matières textiles ou de flbres naturelles ou synthétiques.

29. Utilisation des polymères suivant l'une quelconque des revendications 1 à 6, à titre d'adjuvant suivant les revendications 24 à 28, caractérisée en ce qu'on les met en oeuvre en combinaison avec des tensioactifs ou surfactifs, plus particulièrement, avec des tensioactifs ou surfactifs anioniques.

30. Utilisation des polymères suivant l'une quelconque des revendications 1 à 6, à titre d'adjuvant suivant les revendications 24 à 28, caractérisée en ce qu'on les utilise en combinaison avec des acides carboxyliques complexants.

31. Utilisation des polymères suivant l'une quelconque des revendications 1 à 6, à titre d'adjuvants suivant les revendications 24, 25, 30, 31, caractérisée en ce qu'on les utilise pour le blanchiment sans chlorite, de préférence, selon le procédé à étapes multiples dans un bain de traitement changeable ou au cours de processus continus.

32. Utilisation des polymères suivant l'une quelconque des revendications 1 à 6, à titre d'adjuvant au cours de la fabrication du cuir.

33. Utilisation des polymères suivant l'une quelconque des revendications 1 à 6, à titre d'adjuvant au cours de la fabrication du cuir lors de la trempe, du pelannage, plus particulièrement, au cours de processus de lavage après le pelannage et, plus particulièrement, lors du déchaulage et lors du déchaulage au CO₂.

34. Utilisation des polymères suivant l'une quelconque des revendications 1 à 6, à titre d'additif lors du prétannage, du tannage et du retannage.

35. Utilisation des polymères suivant l'une quelconque des revendications 1 à 6, pour l'inhibition de la dureté de l'eau et à titre d'inhibiteur d'incrustations ou de dépôts.

36. Utilisation des polymères suivant l'une quelconque des revendications 1 à 6, à titre d'agents dispersifs.

37. Détergents de lavage ou de nettoyage, plus particulièrement, détergents de lavage de matières textiles, contenant des polymères suivant l'une quelconque des revendications 1 à 6.

38. Détergents de lavage ou de nettoyage, plus particulièrement, détergents de lavage de matières textiles, suivant la revendication 37, caractérisés en ce qu'ils contiennent de 0,5 à 30% en poids, de préférence, de 2 à 25% en poids, de polymère suivant la revendication 1-13, de 0 à 20% en poids, de préférence, de 5 à 15% en poids, de carbonates inorganiques et de 0 à 20% en poids, de préférence, 5 à 15% en poids, de sels d'acides polycarboxyliques organiques.

39. Détergent suivant les revendications 37 et 38, caractérisé en ce qu'il contient, à titre de substances constituants des adjuvants actifs, de 10 à 65% en poids de zéolite et/ou de silicates d'ensimage cristallins et de 2 à 20% en poids de polymère suivant l'une quelconque des revendications 1 à 6.

40. Détergent suivant l'une quelconque des revendications 37 à 39, caractérisé en ce qu'il contient de 2 à 7% en poids de silicates amorphes.

41. Détergent suivant l'une quelconque des revendications 37 à 40, caractérisé en ce qu'il contient de 10 à 40% en poids de tensioactifs, de 0 à 5% en poids d'inhibiteurs de décoloration, ainsi que 15 à 45% en poids d'autres additifs usuels de détergents et présente une masse volumique apparente de 300 à 1200 g/l, plus particulièrement, supérieure à 600 g/l.

42. Détergent suivant l'une quelconque des revendications 37 à 41, caractérisé en ce qu'il est dépourvu de phosphate et/ou de zéolite et/ou de silicate d'ensimage.

43. Combinaison de produits de charge contenant des polymères suivant l'une quelconque des revendications 1 à 6.

44. Combinaison de produits de charge suivant la revendication 43, caractérisée en ce qu'elle contient de 50 à 70% en poids, de préférence, 55 à 65% en poids, de zéolite et/ou de silicates d'ensimage, plus particulièrement, une zéolite et des silicates d'ensimage cristallins dans le rapport pondéral de 1:1 ou plus et de 1 à 30% en poids d'un polymère suivant l'une quelconque des revendications 1 à 6.

45. Combinaison de produits de charge suivant l'une quelconque des revendications 43 et 44, caractérisée en ce qu'elle contient de 5 à 30% en poids, de préférence, de 5 à 25% en poids de carbonate de sodium, de 0 à 10% en poids, de préférence, de 2 à 8% en poids, de silicates amorphes, de 0 à 8% en poids, de préférence, de 0,5 à 5% en poids et, plus particulièrement, jusqu'à 20% en poids, d'acrylates (co)polymériques habituels et de 0 à 25% en poids, de préférence, de 2 à 20% en poids et, plus particulièrement, de 5 à 20% en poids, de sels d'acides polycarboxyliques organiques.

46. Combinaison de produits de charge suivant l'une quelconque des revendications 43 à 45, caractérisée en ce qu'elle contient des composants liquides à cireux, de préférence, des tensioactifs non ioniques.

47. Procédé de préparation d'une combinaison de produits de charge suivant l'une quelconque des revendications 43 à 46, ou d'un détergent de lavage ou de nettoyage suivant l'une quelconque des revendications 37 à 42, caractérisé en ce que le granulé est fabriqué par séchage par pulvérisation ou par un procédé de mélange, de granulation et/ou d'extrusion.

48. Détergents de nettoyage pour surfaces dures, caractérisés en ce qu'ils contiennent de 1 à 60% en poids des polymères suivant l'une quelconque des revendications 1 à 6, de 5 à 90% en poids, de préférence, de 5 à 70% en poids, d'agents formateurs d'alcalis, de 0 à 60% en poids, de préférence, de 5 à 50% en poids d'agents dispersifs et complexants, de 0 à 10% en poids, de préférence, de 0,5 à 5% en poids, de tensioactifs à faible pouvoir moussant et de 0 à 50% en poids d'autres additifs habituels.

49. Détergent suivant la revendication 48, caractérisé en ce que l'on choisit les agents formateurs d'alcalis dans le groupe constitué par les hydroxydes de métaux alcalins, des carbonates de métaux alcalins et les hydrogénocarbonates de métaux alcalins.

50. Détergent suivant les revendications 48 et 49, caractérisés en ce que l'on choisit les agents dispersifs et complexants dans le groupe formé par les citrates, les phosphonates, les homopolymères et les copolymères de l'acide acrylique, l'acide d'isosérine diacétique, les acides polyasparaginiques, l'acide éthylènediamine tétraacétique et l'acide nitrilotriacétique.

51. Détergent suivant l'une quelconque des revendications 48 à 50, caractérisé en ce que l'on choisit les tensioactifs à faible pouvoir moussant dans le groupe formé par les tensioactifs non ioniques.

52. Détergent suivant l'une quelconque des revendications 48 à 51, caractérisé en ce qu'il contient de 0,5 à 20% en poids d'agent de blanchiment à base d'oxygène et de 0 à 10% en poids d'activateurs de blanchiment.

53. Détergent suivant l'une quelconque des revendications 48 à 52, caractérisé en ce qu'il contient de 0,1 à 5% en poids d'enzymes.

54. Détergent suivant l'une quelconque des revendications 48 à 53, sous forme liquide, pulvérulente, granulée ou sous forme de comprimés.

55. Procédé de fabrication d'un détergent suivant la revendication 54, caractérisé en ce qu'on fabrique celui-ci par séchage par pulvérisation et/ou par des procédés de mélange, de granulation et/ou d'extrusion.
